# EUROPEAN PATENT APPLICATION

(11) **EP 4 661 437 A1**
(43) Date of publication of application: **10.12.2025**
(21) Application number: 25178746.1
(22) Date of filing: 26.05.2025
(51) Int. Cl.: H04W 4/02, H04W 4/30, H04W 4/80, H04W 64/00, H04W 4/029, H04W 4/35

(54) **ELECTRONIC DEVICE, SERVER DEVICE, AND RELATED METHODS FOR PROVIDING A FIRST USER INTERFACE OBJECT**

(30) Priority: 06.06.2024 SE 2450621
(71) Applicant: Sony Network Communications Europe B.V., 2132LS Hoofddorp (NL)
(72) Inventor: THÖRN, Ola, Basingstoke, RG22 4SB (GB)
(74) Representative: Aera A/S

(57) **Abstract**

An electronic device is disclosed. The electronic device comprises memory circuitry, processor circuitry, and a display interface. The electronic device is configured to obtain, from one or more sensors, sensor data indicative of whether a user is in a vicinity of the electronic device. The electronic device is configured to obtain attendance data associated with one or more resources of a facility. The electronic device is configured to, in accordance with the sensor data indicating that a user is in the vicinity of the electronic device, obtain first resource information indicating that a first resource of the one or more resources is an estimated resource of interest for the user. The electronic device is configured to, in accordance with the sensor data indicating that a user is in the vicinity of the electronic device, provide a first user interface object.

## Description

The present disclosure pertains to the field of Internet of Things (IoT) and electronic devices for resource guidance. The present disclosure relates to an electronic device, a server device for providing a first user interface object, and related methods.

### BACKGROUND

Displays indicating the location of a person, for example in a mall, airport, etc., have been known to help a user with determining their location. An approach to achieving this has been to detect the position of the user based on utilizing Bluetooth connectivity that connects to the user's device (e.g., smartphone) and then identify the user via the cloud and the app.

However, by utilizing Bluetooth in such a way (e.g., by identifying a single user in contrast to the core functionality of Bluetooth as a system for providing connectivity between devices) this approach may lead to unreliable and non-robust results. For example, many user devices (e.g., smartphones) are now optimized for power saving and may not allow certain apps to run in the background, thereby potentially blocking Bluetooth connectivity. Further, to detect the position of the user utilizing a Bluetooth connection to the user's device may result in a lack of user privacy, such as locational privacy of a user.

### SUMMARY

Accordingly, there is a need for an electronic device, server device, and related methods for providing a first user interface object, which may mitigate, alleviate or address the shortcomings existing and may provide a first user interface object with improved reliability and/or robustness.

An electronic device is disclosed. The electronic device comprises memory circuitry, processor circuitry, and a display interface. The electronic device is configured to obtain, from one or more sensors, sensor data, e.g., indicative of whether a user is in a vicinity of the electronic device. The electronic device is configured to obtain attendance data associated with one or more resources of a facility. The electronic device is configured to, e.g., in accordance with the sensor data indicating that a user is in the vicinity of the electronic device, obtain first resource information indicating that a first resource of the one or more resources is an estimated resource of interest for the user. The electronic device is configured to, e.g., in accordance with the sensor data indicating that a user is in the vicinity of the electronic device, provide, via the display interface and based on the attendance data and the first resource information, a first user interface object associated with the first resource.

It is an advantage of the present disclosure that the electronic device can obtain, e.g., estimate, a resource of interest for the user, without needing to connect with, such as obtain information from, the user device (such as smartphone) of a user. This may for example result in an increased accuracy and/or reliability of the provided first user interface object as the electronic device does not depend on becoming communicatively coupled with the user device (such as user equipment, UE); this communicative coupling (e.g., via Bluetooth connection) process being inconsistent and, on occasion unsuccessful.

In other words, the disclosed electronic device advantageously bypasses the need for the electronic device to obtain data from the user device in order to provide a first user object associated with the first resource.

This may for example advantageously reduce an amount, such as a number of, of active devices being connected to a local network (such as a network of the facility), thereby enabling improved communication between devices on the local network, e.g., due to improved availability of bandwidth. In other words, the disclosed electronic device and related method may advantageously enable saving of bandwidth, such as network capacity, of a local network.

Further, the disclosed electronic device and related method may enable an improved privacy of the user as the electronic device can provide a first user object associated with the first resource without the need to obtain data from the user device, such as without the need to obtain information indicative of the identity of the user. For example, the electronic device may provide the first user object interface to the user without having obtained any information indicative of the identity of the user of the electronic device. In other words, the disclosed method performed by the electronic device may be performed without the electronic device obtaining information indicative of the identity of the user, e.g., without knowing who the user is.

The electronic device may for example only provide a user interface object, such as the first user interface object, to a user that is within a given distance of the electronic device. This may advantageously enable the electronic device to save energy, such as to increase energy efficiency of the electronic device. In some examples, the electronic device may provide progressively more detailed information as a user approaches the electronic device and/or as a user is located within the vicinity of the electronic device for a progressively increasing period of time. This may advantageously enable the electronic device to improve user engagement with the electronic device and/or efficiency of information transfer from the electronic device to the user.

A user interface object, such as the first user interface object, provided by the electronic device is for example a dynamic and contextually dependent user interface object that may for example be estimated, e.g., by the electronic device and/or the server device, based on current (such as recently updated) information. For example, the attendance data may be updated, e.g., periodically, thereby enabling an improved accuracy of the user interface object, such as an improved accuracy in the first user interface object being the resource of greatest interest to the user.

Furthermore, the electronic device may, e.g., by estimating a resource of interest of the user, provide an improved guidance to the user of the electronic device. For example, the electronic device may for example enable dynamic guidance, e.g., based on attendance data, sensor data, and/or presence data, that is updated, such as periodically. The attendance data, sensor data, and/or presence data may for example respectively comprise near real time attendance data, sensor data and/or presence data. For example, the disclosed devices and related methods may enable a user to faster locate a resource of interest (such as faster find a relevant room) in the facility. For example, the electronic device enables improved relevance of the resources provided (e.g., displayed) to the user, e.g., as less relevant elements are for example not provided. In other words, the disclosed electronic device and related methods can be seen as enabling non-relevant resources for a user to not be provided to the user, e.g., by estimating which resources are relevant to the user.

A method, performed by an electronic device, is disclosed. The method comprises obtaining, from one or more sensors, sensor data indicative of whether a user is in a vicinity of the electronic device. The method comprises obtaining attendance data associated with one or more resources of a facility. The method comprises, in accordance with the sensor data indicating that a user is in the vicinity of the electronic device, obtaining first resource information indicating that a first resource of the one or more resources is an estimated resource of interest for the user. The method comprises, in accordance with the sensor data indicating that a user is in the vicinity of the electronic device, providing via the display interface and based on the attendance data and the first resource information, a first user interface object associated with the first resource.

The disclosed method performed by the electronic device may be performed without the electronic device obtaining information indicative of the identity of the user, e.g., without knowing who the user is. This may advantageously enable the user to have an improved level of privacy, such as their personal identity and/or location not being provided to the electronic device.

A server device is disclosed. The server device comprises memory circuitry, processor circuitry, and an interface. The server device is configured to obtain sensor data indicative of whether a user is in a vicinity of an electronic device. The server device is configured to determine, based on the sensor data, whether the user is in a vicinity of the electronic device. The server device is configured to obtain attendance data associated with one or more resources of a facility. The server device is configured to estimate, based on the attendance data and/or the sensor data, a first resource of the one or more resources being a resource of interest for the user. The server device is configured to provide, to the electronic device, first resource information indicating that the first resource of the one or more resources is a resource of interest for the user.

It is an advantage of the present disclosure that the server device can estimate a resource of interest for the user without needing to obtain information from the user device (such as smartphone) of a user. In other words, the disclosed server device advantageously bypasses the need to obtain (e.g., indirectly) data from the user device in order to estimate a first user object associated with the first resource.

Further, the disclosed server device and related method may enable an improved privacy of the user as the server device can estimate a first user object associated with the first resource without the need to obtain information indicative of the identity of the user. For example, the server device may estimate the first user object interface without having obtained any information indicative of the identity of the user of the electronic device.

The server device may for example only estimate a user interface object, such as the first user interface object, to a user that is within a given distance of the electronic device. This may advantageously enable the server device to save energy, such as to increase energy efficiency of the server device.

A user interface object, such as the first user interface object, is for example estimated, based on up-to-date attendance data (such as attendance data that is periodically updated), dynamically by the server device user. This may advantageously enable an improved accuracy of the user interface object, such as an improved accuracy in the estimation of first user interface object being the resource of greatest interest to the user.

Furthermore, the server device may, e.g., by estimating a resource of interest of the user, enable an improved guidance to be provided to the user of the electronic device. For example, the server device may for example enable dynamic guidance, e.g., based on attendance data, sensor data, and/or presence data, that is updated, such as periodically. The attendance data, sensor data, and/or presence data may for example respectively comprise near real time attendance data, sensor data and/or presence data.

A method, performed by a server device, is disclosed. The method comprises obtaining sensor data indicative of whether a user is in a vicinity of an electronic device. The method comprises determining, based on the sensor data, whether the user is in a vicinity of the electronic device. The method comprises obtaining attendance data associated with one or more resources of a facility. The method comprises estimating, based on the attendance data and/or the sensor data, a first resource of the one or more resources being a resource of interest for the user. The method comprises providing, to the electronic device, first resource information indicating that the first resource of the one or more resources is a resource of interest for the user.

A system is disclosed. The system comprises a plurality of electronic devices and a server device configured perform any of the methods disclosed herein.

In some examples, the plurality of electronic devices of the system may be communicatively coupled, e.g., such that one or more electronic devices of the plurality of electronic devices can provide corresponding user interface objects, e.g., first user interface objects, to the user. For example, when a user is moving towards the first resource (e.g., as indicated by the first user interface object), one or more of the electronic devices (e.g., electronic devices that the user moves past on the way to the first resource) may provide, to the user, directions to the first resource.

### BRIEF DESCRIPTION OF THE DRAWINGS

The above and other features and advantages of the present disclosure will become readily apparent to those skilled in the art by the following detailed description of examples thereof with reference to the attached drawings, in which:
Fig. 1 is a diagram illustrating an example system comprising an example electronic device and an example server device according to this disclosure,
Fig. 2 is a block diagram illustrating an example electronic device according to this disclosure,
Fig. 3 is a block diagram illustrating an example server device according to this disclosure,
Fig. 4A-B show a flow-chart illustrating an example method, performed in an electronic device, for providing a first user interface object according to this disclosure,
Figs. 5A-C show a flow-chart illustrating an example method, performed in a server device for providing a first user interface object according to this disclosure,
Fig. 6 is a schematic diagram illustrating an example embodiment according to this disclosure, and
Figs. 7A-C show schematic diagrams illustrating an example embodiment according to this disclosure.

### DETAILED DESCRIPTION

Various examples and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the examples. They are not intended as an exhaustive description of the disclosure or as a limitation on the scope of the disclosure. In addition, an illustrated example needs not have all the aspects or advantages shown. An aspect or an advantage described in conjunction with a particular example is not necessarily limited to that example and can be practiced in any other examples even if not so illustrated, or if not so explicitly described.

As discussed in detail herein, the present disclosure relates to a system 1. The system 1 comprises an electronic device 300 and a server device 400.

The figures are schematic and simplified for clarity, and they merely show details which aid understanding the disclosure, while other details have been left out. Throughout, the same reference numerals are used for identical or corresponding parts.

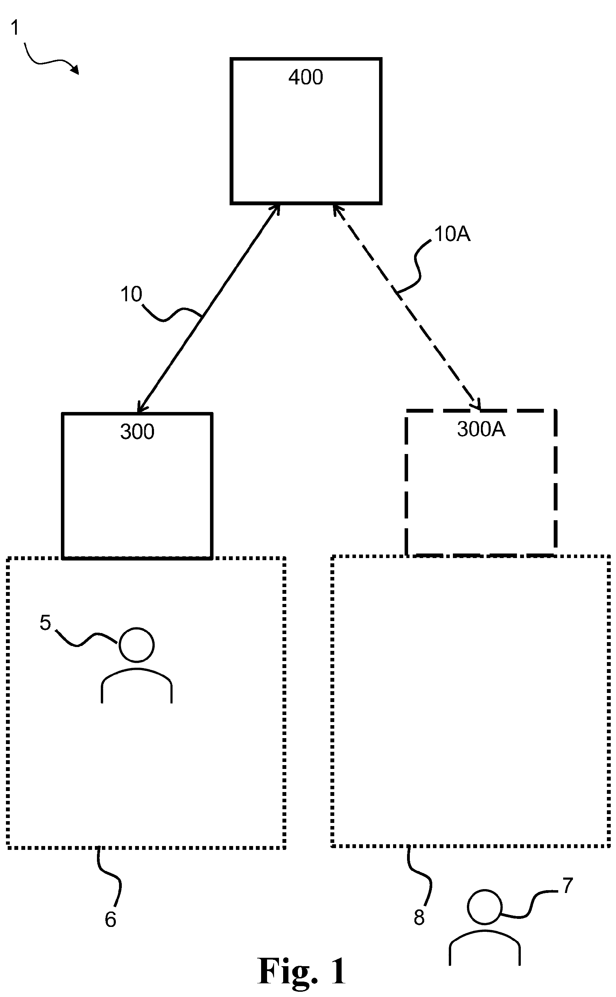

Fig. 1 is a diagram illustrating an example system 1 comprising an example server device 400 and example electronic devices 300, 300A according to this disclosure. The electronic devices 300, 300A may be configured to communicate with the server device 400 via a wireless link and/or wired link 10, 10A.

An electronic device 300 is disclosed. The electronic device 300 comprises memory circuitry, processor circuitry, and a display interface. The electronic device 300 is configured to obtain, from one or more sensors, sensor data indicative of whether a user 5 is in a vicinity 6 of the electronic device 300. The electronic device 300 is configured to obtain attendance data associated with one or more resources of a facility. The electronic device 300 is configured to, in accordance with the sensor data indicating that a user 5 is in the vicinity 6 of the electronic device 300, obtain first resource information indicating that a first resource of the one or more resources is an estimated resource of interest for the user. The electronic device 300 is configured to, in accordance with the sensor data indicating that a user 5 is in the vicinity 6 of the electronic device, provide, via the display interface and based on the attendance data and the first resource information, a first user interface object associated with the first resource.

A server device 400 is disclosed. The server device 400 comprises memory circuitry, processor circuitry, and an interface. The server device 400 is configured to obtain sensor data indicative of whether a user, e.g., such as a user 5 and/or 7 of the electronic device 300 and/or 300A respectively, is in a vicinity 6, 8 of an electronic device 300, 300A. The server device 400 is configured to determine, based on the sensor data, whether the user 5, 7 is in a vicinity 6, 8 of the electronic device 300, 300A. The server device 400 is configured to obtain attendance data associated with one or more resources of a facility. The server device 400 is configured to estimate, based on the attendance data and/or the sensor data, a first resource of the one or more resources being a resource of interest for the user 5, 7. The server device 400 is configured to provide, to the electronic device 300, 300A, first resource information indicating that the first resource of the one or more resources is a resource of interest for the user 5, 7.

A system 1 is disclosed. The system 1 comprises a plurality of electronic devices 300 and 300A and a server device 400 configured perform any of the methods disclosed herein.

Fig. 1 shows a user 5 of the electronic device 300, and a user 7 of the electronic device 300A. The user 5 is located within a vicinity 6 of the electronic device 300. The electronic device 300 comprises one or more sensors, e.g., configured to obtain sensor data indicative of whether the user 5 is in a vicinity 6 of the electronic device 300, such as a given distance from the electronic device 300. The electronic device 300 is configured to obtain, using the one or more sensors, the sensor data.

The electronic device is for example configured to obtain attendance data, via the link 10, from the server device 400 of system 1. The electronic device 300 is configured to, in accordance with the sensor data indicating that a user 5 is in the vicinity 6 of the electronic device 300, provide a first user interface object associated with a first resource to the user 5. For example, the electronic device 300 may indicate to the user 5 an estimated resource of interest for the user 5, such as a meeting room in the facility where the electronic device 300 is located.

The user 7 is not located within a vicinity 8 of the electronic device 300A, and the electronic device 300A is configured to refrain from providing a first user interface object associated with a first resource to the user 7.

An electronic device disclosed herein may be a seen as a display device, such as a device configured to display information to a user, such as user 5 of the electronic device 300. The electronic device 300 is for example configured to be connected, e.g., such as to obtain and/or provide information, to the internet. The electronic device 300 may be configured to communicate with the electronic device 300A and/or the server device 400 via a network (such as an external network, for example a wired communication system and/or a wireless communication system). In some examples, the electronic device 300 can be seen as a first electronic device, and the electronic device 300A can be seen as a second electronic device. For example, the plurality of electronic devices of the disclosed system may comprise a first electronic device, a second electronic device, a third electronic device, etc.

The technique disclosed in the present disclosure may for example be applied in the context of guiding a user in a facility, such as guiding a user to a resource of interest of the user.

The system 1 may optionally comprise a network node (such as a base station, not shown) that the electronic device 300 and/or the electronic device 300A may communicate through. A network node refers to an access point and/or radio access network node operating in the radio access network, such as a base station, an evolved Node B, eNB, gNB in NR. In one or more examples, the RAN node is a functional unit which may be distributed in several physical units.

The electronic device 300, 300A may use, such as via the interface circuitry 303 a cellular system, for example, a 3GPP wireless communication system and/or the internet, and/or a local communication system, such as 10 short-range wireless communications systems, such as Wi-Fi, Bluetooth, Zigbee, IEEE 802.11, IEEE 802.15 to communicate. The server device 400 may be seen as a device configured to act as a server in communication with a client device, where the electronic device 300, the electronic device 300A, and/or the one or more sensors are configured to act as clients.

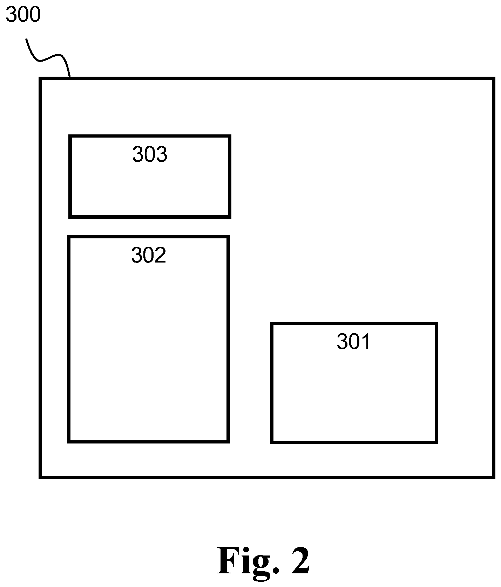

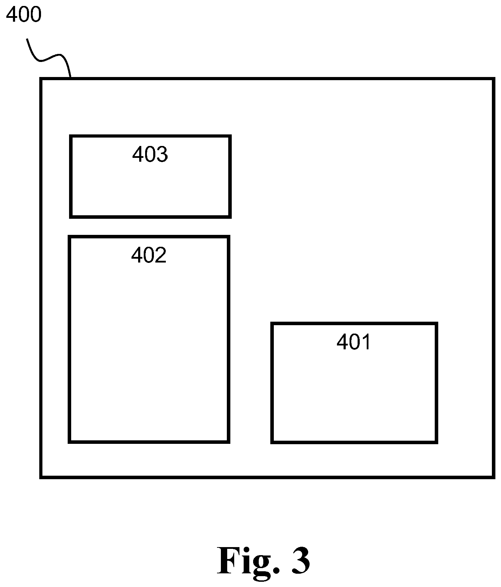

Fig. 2 shows a block diagram of an example electronic device 300 according to the disclosure. The electronic device 300 comprises memory circuitry 301, processor circuitry 302, and a display interface 303. The electronic device 300 may be configured to perform any of the methods disclosed in Fig. 3. In other words, the electronic device 300 may be configured for providing a first user interface object. The electronic device 300 is for example the electronic device disclosed herein. The electronic device may for example be seen as an electronic device configured for user guidance, such as to guide a user to a resource of interest. In some examples, the electronic device can be seen as an electronic device configured to provide a first user interface object to guide a user, such as to guide a user to a resource of interest.

The electronic device is configured to obtain, from one or more sensors, sensor data indicative of whether a user is in a vicinity of the electronic device.

The electronic devices 300 comprises a display interface which may be configured to provide, such as display, information to a user. For example, the display interface may comprise one or more visual displays configured to display information, such as first resource information, to the user. The display interface for example comprises one or more screens configured to display information to the user. In some examples, the display interface is a projector screen, upon which information is projected.

In one or more example electronic devices, the display interface is configured for auditory display, such as provision of audio to the user. For example, the first resource information be provided by the display interface as an auditory display (such as audification, sonification, earcons, and/or voice messages).

In one or more example electronic devices, to provide the first resource information may comprise to provide, via the display interface of the electronic device, first resource information indicating that a first resource of the one or more resources is an estimated resource of interest for the user.

In some examples, to provide the first user interface object may comprise displaying a first user interface object indicative of a first resource representation. For example, the first user interface object may comprise a representation of the first resource associated with the first user interface object.

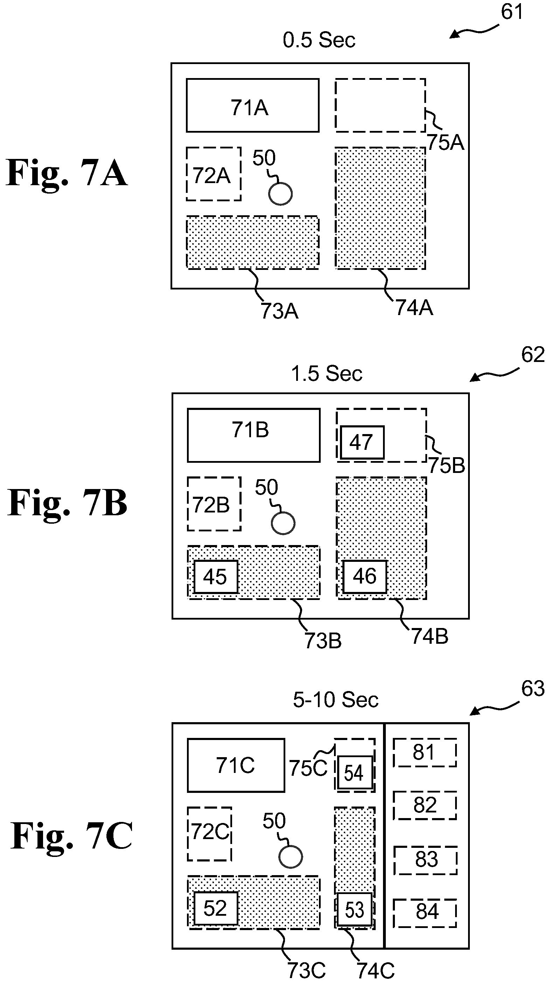

A user interface object (such as the first user interface object) may comprise one or more, such as a plurality of, user interface objects. For example, the display interface may configured to provide one or more first user interface objects, such as a first primary user interface object and/or a first secondary user interface object, etc., (as shown in Figs 7A-C). A user interface object may refer herein to a graphical representation of a resource that is displayed on a display interface of the electronic device. The user interface object may be user-interactive, or selectable by a user input. For example, an image (e.g., icon), a button, and text (e.g., hyperlink) each optionally constituting a user interface object. The user interface object may form part of a widget. A widget may be seen as a mini-application that may be used by the user.

The user is for example a person, such as a person associated with an event at the facility. For example, the electronic device is configured to obtain sensor data indicative of the user, such as one or more users. The electronic device is for example configured to obtain sensor data indicative of a location of the user, e.g., whether indicative of whether the user is in a vicinity of the electronic device. In one or more example embodiments, the user may be seen as a group of users, such as a group of persons associated with an event at the facility.

The one or more sensors for example comprise one or more sensors configured to obtain sensor data associated with the user. In one or more example electronic devices, the electronic device comprises a first sensor. In one or more example electronic devices, the first sensor is configured to obtain sensor data indicative of whether the user is in the vicinity of the electronic device.

In some examples, one or more of the one or more sensors may be located in proximity to the display interface, such as adjacent to the display interface.

The one or more sensors for example comprise a first sensor, a second sensor, a third sensor, etc. For example, any sensor of the one or more sensors may be a visual sensor, such as an optical sensor. A sensor of the one or more sensors may be one or more of: a camera, infra-red sensor, radar, and proximity sensor. The sensor data for example comprises first sensor data, such as sensor data obtained using the first sensor of the one or more sensors. The sensor data for example comprises second sensor data, such as sensor data obtained using the second sensor of the one or more sensors. The sensor data for example comprises third sensor data, such as sensor data obtained using the third sensor of the one or more sensors.

In one or more example electronic devices, the electronic device may be configured to obtain sensor data from a sensor located externally to the electronic device, such as a pressure sensor on the floor. The pressure sensor on the floor may for example be configured to detect the presence of a user, e.g., when the user stands on the pressure sensor, and the pressure sensor may then provide pressure sensor data indicative of the presence of the user to the electronic device.

In one or more example electronic devices, the electronic device comprises a button that the user may depress to activate the display. For example, the one or more sensors may comprise a pressure sensor, such as the button. Upon the user depressing the button, the electronic device may obtain sensor data indicative of a user being in a vicinity of the electronic device.

The button may for example be located externally to the electronic device, such not a part of the electronic device.

In one or more example electronic devices, the sensor data comprises information indicative of the proximity of the user to the electronic device. For example, the sensor data is indicative of whether the user is in a vicinity of the electronic device.

In one or more example electronic devices, to obtain sensor data indicative of whether the user is in the vicinity of the electronic device comprises to obtain, based on the sensor data, a distance parameter indicative of a distance of the user from the electronic device. The distance parameter for example the distance parameter comprises one or more values indicative of the distance of the user from the electronic device.

In some examples, to obtain sensor data indicative of whether the user is in the vicinity of the electronic device comprises to determine, based on the sensor data, a distance parameter indicative of a distance of the user from the electronic device. In some examples, to obtain sensor data indicative of whether the user is in the vicinity of the electronic device comprises to obtain, from a server device and/or based on the sensor data, a distance parameter indicative of a distance of the user from the electronic device.

In one or more example electronic devices, to obtain sensor data indicative of whether the user is in a vicinity of the electronic device, comprises to obtain a determination of whether the distance parameter meets a second criterion.

In one or more example electronic devices, to obtain sensor data indicative of whether the user is in a vicinity of the electronic device, comprises to determine whether the distance parameter meets a second criterion. In one or more example electronic devices, to obtain sensor data indicative of whether the user is in a vicinity of the electronic device, comprises to obtain, from a server device, a determination of whether the distance parameter meets a second criterion.

The vicinity of the electronic device can be seen as an area surrounding the electronic device. For example, the vicinity can be seen as a radius around the electronic device. For example, when a user is within said area or said radius around the electronic device, the user can be seen as being within a vicinity of the electronic device. The second criterion may be seen as a criterion associated with a distance from the electronic device. When the distance parameter meets the second criterion the user can for example be seen as being located within the vicinity of the electronic device. In other words, when the distance parameter meets the second criterion the user can be seen as being within a given area and/or radius surrounding the electronic device. Alternatively or additionally, the second criterion may be associated with a floor number of the facility. In other words, when the distance parameter meets the second criterion, the user can be seen as being on the same floor as the electronic device, and thereby in the vicinity of the electronic device.

In some examples, the second criterion is based on a second threshold. The second threshold is for example associated with a distance from the electronic device, such as an external perimeter of the vicinity of the electronic device, such as the outer edges of the vicinities 6 and 8 shown in Fig. 1. In other words, the second threshold may indicate a distance from the electronic device, such as a distance indicative of the boundary of the vicinity of the electronic device.

The electronic device is configured to obtain attendance data associated with one or more resources of a facility. In some examples, the electronic device is configured to obtain, from the server device, attendance data associated with one or more resources of a facility.

The facility can for example be seen as any location, such as a venue and/or premises. The facility may for example be any space, such as an indoor space and/or outdoor space.

A resource is for example a part of the facility. For example, the resource may be any item that is associated with the facility. In some examples, the resource can be seen as an item that the user may use. The resource may for example be booked and/or or reserved, e.g., by an attendee. In other words, the resource may for example be used, such as occupied and/or non-available, for one or more time periods, e.g., a time period associated with an event at the facility. The resource may for example be associated with attendance data.

The attendance data may be seen as data associated with an attendance at the one or more resources of the facility. The attendance data may be associated with one or more resources of the facility and one or more attendees associated with the one or more resources and/or the facility.

In one or more example electronic devices, the attendance data comprises one or more of: event data associated with an event at the facility, facility data indicative of a layout of the facility, location data indicative of the location of an attendee, and historical attendance data indicative of an attendance history associated with the one or more resources of the facility.

In one or more examples, the electronic device may obtain the attendance data (e.g., the location data) based on the sensor data obtained from the one or more sensors. The attendance data can for example be seen as context dependent information. For example, the attendance data may be updated over time, e.g., periodically, thereby allowing for the system to provide dynamically updated user interface objects (e.g., the first user interface object).

An event at the facility may for example be any type of gathering, congregation, engagement, etc, involving one or more attendees at the facility. For example, the event may have a pre-determined start- time, end-time, and/or location. The event data for example comprises information indicative of the timing and/or location of one or more events at the facility. In other words, the event data can be seen as calendar data. For example, the event data comprises a resource schedule and/or event schedule indicative of one or more resources associated with the one or more events at the facility. For example, the event data may comprise event data obtained from a meeting schedule at the facility, such as a schedule of meetings to be held in one or more meeting rooms. For example, the attendance data, e.g., the event data, may be indicative of whether a resource is booked and/or reserved. The attendance data, e.g., the event data, is for example indicative of whether a resource is available to be booked and/or reserved.

In some examples, the event data is indicative one or more of: who is attending the event, when the event is (such as a start time and/or end time), what resources are associated with the event, and a registered number of attendees (e.g., signed up attendees). For example, the event data may be obtained from a calendar platform associated with one or more attendees of the event.

For example, the event may be a meeting, e.g., in a meeting room. When the event is a meeting, e.g., in a meeting room, the resource may for example be one or more of: the meeting room itself, a desk in the meeting room, a chair in the meeting room, etc. The event may for example be a cinema screening where the facility is a cinema. For example, when the event is a cinema screening, the resource may be the screening room itself and/or one or more seats in the screening room. In some examples, the facility may comprise a cinema where an event, such as a cinema screening, takes place.

The facility data is for example indicative of the location of the one or more resources of the facility. For example, the facility data may be indicative of a floorplan of the facility, e.g., the floorplan comprising the location of one or more resources. The electronic device and/or server device may for example be configured to obtain facility data indicative of the layout of the facility from a location map database.

In some examples, the facility data comprises one or more floorplans (e.g., for one or more, such as each floor, of the facility). For example, the facility data comprises information indicative of the relation between one or more floorplans of the facility, e.g., stairs and/or elevators for transfer between floors of the facility. In some examples, the facility data comprises information indicative of one or more separate (e.g., adjacent) layouts of the facility, such as one or more adjacent areas of the facility. For example, the facility data may comprise information indicative the layout and/or relative location of one or more areas, such as terminals, of the facility. For example, the facility data comprises information indicative of transfer options between areas (such as between terminals) of the facility. In some examples, the facility data comprises information indicative of one or more areas of a given floor of the facility, e.g., a western area of a floor, a central area of a floor, etc. For example, the facility data comprises information indicative of one or more partitions of the facility, e.g., of a given floor of the facility.

The facility data for example comprises information indicative of the location of the electronic device, such as the display interface, in the facility. For example, the location of the electronic device in the facility may be registered in a location map database. The electronic device may for example be configured to identify, based on the information indicative of the location of the electronic device in the facility, the proximity of one or more resources to the electronic device (and/or one or more resources that are located nearby).

The location data is for example indicative of the location of a user in the facility. In some examples, the location data may be determined based on the sensor data obtained from the one or more sensors. In some examples, the location data may be obtained via one or more devices external to the electronic device. For example, the location data may be obtained from one or more card access readers located at the facility. For example, the electronic device may obtain location data indicative of the location of one or more attendees of the event from one or more card access readers located at the facility, e.g., when an attendee of the meeting swipes an identity card on the card access reader, such as to gain access to an area of the facility. In some examples, an attendee of an event can be seen as a participant of the event.

In some examples, the system 1 comprises one or more devices configured for obtaining the location of an attendee. For example, the one or more devices configured for obtaining the location of an attendee may comprise one or more of: card access reader, GPS sensor, WiFi chip, etc.

The historical attendance data can for example be seen as attendance data associated with a previous period in time. For example, the historical attendance data may be associated with one or more previous events, such as events at the facility. For example, the historical attendance data, e.g., which resources (e.g., meeting rooms) attendees have been to previously.

The historical attendance data for example comprises one or more of: historical event data associated with a previous event at the facility, historical facility data indicative of a previous layout of the facility, and historical location data indicative of one or more previous locations of an attendee.

In some examples, the historical attendance data comprises information indicative of whether a user has previously attended an event at the facility. In some examples, the historical attendance data comprises information indicative of whether a user has been previously associated with a given resource, e.g., whether a user has previously attended a meeting at a given meeting room at a facility. In other words, the historical attendance data is indicative of whether an attendee is familiar with the resource and/or the facility.

In some examples, the historical attendance data comprises information indicative of a number of events, e.g., associated with a given resource, at that an attendee has attended at a given facility. The historical attendance data for example comprises information indicative of whether a user has accepted one or more invitations to one or more events, e.g., events at the facility. For example, the electronic device and/or the server device may determine that the number of events, e.g., associated with a given resource, at that an attendee has attended at a given facility based on the historical attendance data, e.g., based on whether an attendee has accepted an invitation to an event, e.g., associated with a given resource, at the facility.

The electronic device is configured to, in accordance with the sensor data indicating that a user is in the vicinity of the electronic device, obtain first resource information indicating that a first resource of the one or more resources is an estimated resource of interest for the user.

The electronic device is configured to, in accordance with the sensor data not indicating that a user is in the vicinity of the electronic device, refrain from obtaining first resource information indicating that a first resource of the one or more resources is an estimated resource of interest for the user.

In some examples, the electronic device is configured to, in accordance with the sensor data indicating that a user is not in the vicinity of the electronic device, refrain from obtaining first resource information indicating that a first resource of the one or more resources is an estimated resource of interest for the user.

In one or more example electronic devices, to obtain first resource information indicating that a first resource of the one or more resources is an estimated resource of interest for the user in accordance with the sensor data indicating that a user is in the vicinity of the electronic device comprises to, in accordance with the sensor data indicating that a user is in the vicinity of the electronic device, determine first resource information indicating that a first resource of the one or more resources is an estimated resource of interest for the user.

The first resource can for example be any resource of the one or more resources of the facility is estimated, e.g., by the server device and/or the electronic device, to be of interest to the user.

The first resource information may indicate a particular resource, such as the estimated resource of interest for the user, of the one or more resources. For example, the estimated resource of interest for the user can be seen as a predicted resource of interest for the user. The estimated resource of interest for the user may for example be estimated, such as predicted, e.g., based on the attendance data and/or the sensor data, at the electronic device and/or at the server device. For example, the electronic device may provide the attendance data and/or the sensor data to the server device. The server device may then estimate, such as predict, based on the provided attendance data and/or the sensor data, the estimated resource of interest for the user.

In one or more example electronic devices, the display interface of the electronic device 300 may for example be triggered, such as activated, in accordance with the user being in the vicinity of the electronic device, such as in accordance with the distance parameter meeting the second criterion.

The electronic device is configured to, in accordance with the sensor data indicating that a user is in the vicinity of the electronic device, provide, via the display interface and based on the attendance data and the first resource information, a first user interface object associated with the first resource.

The electronic device is configured to, in accordance with the sensor data not indicating that a user is in the vicinity of the electronic device, refrain from providing, via the display interface and based on the attendance data and the first resource information, a first user interface object associated with the first resource.

The electronic device is configured to, in accordance with the sensor data indicating that a user is not in the vicinity of the electronic device, refrain from providing, via the display interface and based on the attendance data and the first resource information, a first user interface object associated with the first resource.

In one or more examples, to provide the first interface object associated with the first resource comprises to, in accordance with the sensor data indicating that a user is in the vicinity of the electronic device, display, via the display interface and based on the attendance data and the first resource information, a first user interface object associated with the first resource. In some examples, the first user interface object can be seen as a first user interface element.

The first user interface object can for example be seen as a user interface object configured to provide first resource information indicating that a first resource of the one or more resources is an estimated resource of interest for the user. For example, the first user interface object may be seen as a user interface object via which the electronic device is configured to provide first resource information indicating that a first resource of the one or more resources is an estimated resource of interest for the user.

**In** some examples, the first user interface object can be seen as being representative of the first resource. For example, the electronic device may be configured to provide, to the user, information associated with the first resource via the first user interface object.

For example, the first user interface object may indicate the first resource to the user with a higher priority over other resources. For example, to provide the first user interface object may comprise to provide the first user interface object being one or more of: highlighted, coloured, prioritized location, and larger size. For example, the first user interface object may be determined and/or generated, and displayed in a brighter colour, such as highlighted, than other user interface objects, e.g., not associated with the first resource. In some examples, the first user interface object associated with the first resource may be displayed in a prioritized location of, such as at the top of, the display interface of the electronic device. In other words, the first user interface object may enable the first resource information associated with the first resource to be displayed with an increased visibility to the user, such as the user being more readily able to access, localize, and/or view the first resource information provided by the electronic device.

For example, an area of a screen of the display interface may have a given display area capable of displaying user interface objects associated with the resources of the facility. The electronic device may be configured to such that the first user interface object associated with the first resource occupies a larger proportion of the area of the screen than other user interface objects, such as the second user interface object, third user interface object, etc.

In some examples, the first user interface object may provide, e.g., to the user, directions for first resource. For example, the first user interface object may indicate, e.g., with arrows and/or instructions, one or more directions to be taken by the user to reach the first resource.

In one or more examples, the user interface object comprises an indication of the location of the user. For example, the electronic device may be configured to display to the user a user interface object indicative of the location of the user, e.g., in the facility. For example, the first user interface object may indicate one or more directions to be taken by the user, from the provided indication of the location of the user, to reach (e.g., arrive at) the first resource.

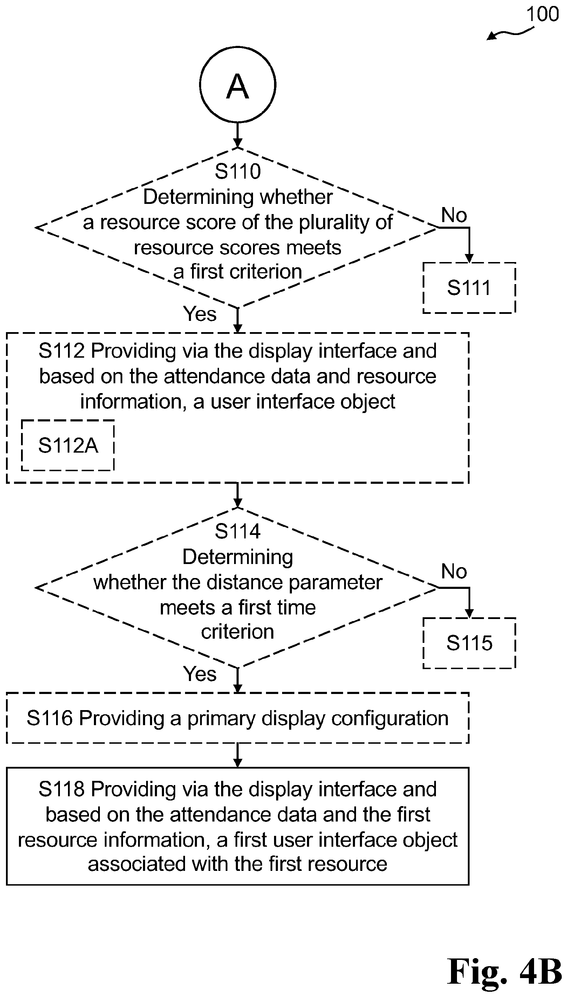

For example, electronic device may enable a user to faster locate the resource of interest (such to more rapidly find the resource of interest. The electronic device for example enables improved relevance of the resources provided to the user, e.g., as less relevant resources are for example not provided, e.g., based on the resource parameters, such as the resource scores. In other words, the electronic device may refrain (such as in S111 of Fig. 4B) from providing resources that do not satisfy the first criterion, such as resources that are estimated to be non-relevant to the user.

For example, resources can be prioritized based on how soon they are occurring, e.g., when the resource is a meeting, meetings within the next 15 mins will be prioritized.

In one or more example electronic devices, to obtain first resource information comprises to obtain, based on the attendance data, an estimation of a first resource of the one or more resources being a resource of interest for the user.

In one or more example electronic devices, to obtain the estimation of a first resource of the one or more resources being a resource of interest for the user comprises to obtain, from the server device, an estimation of a first resource of the one or more resources being a resource of interest for the user.

The estimation of the first resource can for example be seen as a prediction of the first resource, such as a prediction and/or an estimation of the resource being the estimated resource of interest. For example, the electronic device and/or the server device may be configured to determine, based on the attendance data and/or the sensor data, whether a given resource is the first resource of interest for the user.

In one or more example electronic devices, to obtain an estimation of a first resource comprises to obtain, based on the attendance data, one or more resource parameters each corresponding with a resource of the one or more resources.

A resource parameter can for example be seen as a parameter that is associated with a resource. For example, the resource parameter may be indicative of whether a resource is of interest to a user, such as whether the resource is the first resource. In other words, the resource parameter may be indicative of whether the corresponding resource is the first resource, such as the estimated resource of interest for the user.

For example, to obtain one or more resource parameters each corresponding with a resource of the one or more resources comprises to determine, based on the attendance data, one or more resource parameters each corresponding with a resource of the one or more resources. The one or more resource parameters each corresponding with a resource of the one or more resources may for example be determined at the electronic device and/or at the server device.

In one or more example electronic devices, the one or more resource parameters comprise a plurality of resource scores each corresponding with a resource of the one or more resources.

For example, the resource parameter may comprise a plurality of resource scores associated with one or more of the resources, such as with each resource of the one or more resources of the facility. In some examples, the resource score can be seen as a priority score, such as a priority score indicative of the level of priority with which the given resource associated with the priority score is to be displayed to the user, e.g., as the first user interface object. For example, the resource parameter, such as the resource score, comprises a value. The value comprised in the resource parameter, such as the resource score, is for example a value between 0 and 1.

In some examples, to obtain the one or more resource parameters each corresponding with a resource of the one or more resources comprises to obtain, from the server, the one or more resource parameters each corresponding with a resource of the one or more resources. In some examples, to obtain, based on the attendance data, one or more resource parameters comprises to obtain one or more determined resource parameters from the server device. For example, the one or more resource parameters may be determined by a server device, e.g., external to the electronic device, where the server device and the electronic device are communicatively coupled (e.g., directly and/or indirectly).

In some examples, to obtain the one or more resource parameters each corresponding with a resource of the one or more resources comprises to determine, based on the attendance data, the one or more resource parameters each corresponding with a resource of the one or more resources.

In one or more examples, a resource associated with one or more attendees that have more total events (e.g., meetings) may correspond with a higher resource score than a resource associated with one or more attendees that have fewer total events, e.g., which may then correspond with a relatively lower resource score.

In one or more examples, a resource (e.g., a meeting room) associated with one or more attendees that have not previously visited the facility and/or the resource associated with the event may correspond with a high resource score than a resource associated with attendees that have previously visited the facility and/or the resource, e.g., that are familiar with the location of the facility and/or the resource.

In one or more examples, a resource (e.g., a meeting room) associated with one or more attendees that have visited the facility and/or the resource associated with the event a greater number of times may correspond with a higher resource score than a resource associated with attendees that have previously visited the facility and/or the resource a lower number of times, e.g., that are less familiar with the location of the facility and/or the resource.

In one or more examples, a resource (e.g., a meeting room) associated with one or more attendees that have visited a given area of the facility, such as a given floor of the facility, associated with the event may correspond with a higher resource score than a resource associated with attendees that have not previously visited the given area of the facility, such as the given floor of the facility, e.g., that are less familiar with given area, e.g., floor, of the facility. For example, the electronic device may be configured to determine, e.g., based on the historical attendance data, that an attendee that has previously attended an event on the given area, e.g., floor, of the facility can be seen as having visited that area, e.g., floor. In some examples, the given area of the facility may be seen as an area of a floor, e.g., a western area of a floor, a central area of a floor, etc.

In one or more examples, a resource associated with an event where one or more attendees have not yet arrived may have a higher resource score than a resource associated with an event where all attendees are present. Whether one or more attendees have not yet arrived or whether all attendees are present may for example be determined (e.g., by the server device and/or the electronic device) based on the presence data, e.g., obtained using one or more resource sensors, such as a camera in a meeting room.

In one or more examples, a resource associated with an event where one or more attendees have not arrived after the pre-determined start-time of the event may have a higher resource score than a resource associated with an event where one or more attendees have not arrived before the pre-determined start-time of the event. Whether one or more attendees have arrived before and/or after the pre-determined start-time of the event may be determined (e.g., by the server device and/or the electronic device) based on the attendance data and/or the presence data.

In one or more examples, a resource associated with an event having a start-time that is upcoming and/or imminent, such as upcoming within the next 15 minutes, may have a higher resource score than a resource associated with an event having a longer time period until the event start-time, e.g., upcoming within the next 120 minutes. In one or more examples, the event data, e.g., comprised in the attendance data, comprises information indicative of the start times of one or more events at the facility.

In one or more examples, a resource that is associated with less events (e.g., a resource that is less frequently used by attendees) may have a lower resource score than a resource that is associated with more events (e.g., a resource that is more frequently used by attendees). In other words, infrequently used resources may have a lower resource score than frequently used resources. The electronic device may be configured to determine whether a resource is more frequently used or less frequently used based on the attendance data, such as based on event data.

In one or more examples, the electronic device may be configured to determine, e.g., based on the attendance data and/or the presence data, a difficulty parameter associated with a given resource. For example, the difficulty parameter may be indicative of how difficult a room is for attendees to located. The difficulty parameter may for example be determined (e.g., by the electronic device and/or the server device) based on how frequently attendees arrive late to events associated with the resource and/or for one or more time periods indicative of how late the attendees arrive to the event associated with the resource. The electronic device and/or the server device is for example configured to determine the difficulty parameter based on the presence data obtained by the one or more resource sensors at the one or more resources. For example, electronic device and/or the server device may be configured to determine, based on the difference between people detected (e.g., by the resource sensors) in the room and signed up attendees (e.g., as indicated in the event data), such as for a given time period, the difficulty parameter associated with a given resource. In some examples, the electronic device could dynamically update the difficulty parameter based on attendee data and/or presence data.

In one or more examples, when one or more attendees are attending back to back events (e.g., meetings), the resource associated with the back to back events may have a lower resource score than resources not associated with a back to back event. For example, when a second meeting is scheduled immediately after a first meeting, the resource score of the second meeting may be lower than a resource score of the first meeting and/or of any non-back to back meeting.

In one or more example electronic devices, to obtain an estimation of a first resource comprises to obtain a comparison of the resource parameters, e.g., of the one or more resource parameters each corresponding with a resource of the one or more resources.

For example, when the resource parameters comprises a plurality of resource scores, to obtain a comparison of the resource parameters comprises obtaining a comparison of the resource scores, e.g., each corresponding with a resource of the one or more resources.

In one or more example electronic devices, to provide the first user interface object associated with the first resource comprises to provide, based on the one or more resource parameters, the first user interface object associated with the first resource.

In some examples, to obtain a comparison of the resource parameters comprises to determine which resource parameter is greater, such as which resource parameter has a greater resource score.

In one or more example electronic devices, to obtain a comparison of the resource parameters comprises to obtain a comparison of the plurality of resource scores. In one or more example electronic devices, the first resource is the resource of the one or more resources having the highest resource score.

In other words, the first resource can be seen as the resource corresponding with the resource parameter having the highest value, such as the highest resource score. The highest resource score can for example be seen as the resource parameter which is determined, e.g., when compared with one or more other resource parameters, to have the highest value, such as the highest resource score. For example, the first resource can be seen as the highest priority resource, such as the highest ranking resource.

In one or more example electronic devices, the first resource having the highest resource score is the resource of the one or more resources that is estimated to be of the highest interest to the user. In other words, the first resource determined, e.g., by comparison, to have the highest resource score of the one or more resources is estimated, e.g., by the electronic device and/or the server device, to be of the highest interest to the user.

For example, the first resource having the highest resource score may be seen as the resource of the one or more resources that is estimated to be a resource of interest to the user.

In one or more example electronic devices, the sensor data is indicative of a number of users in the vicinity of the electronic device.

For example, a sensor (such as the first sensor) of the one or more sensors of the electronic device may be configured to obtain sensor data indicative of a number of users in the vicinity of the electronic device. The sensor data can for example be indicative of how many users are within the vicinity of the electronic device, such as near the display interface of the electronic device. For example, when 5 users are standing in-front of the display of the electronic device, the sensor data (e.g., obtained by a camera of the electronic device) may indicate that 5 users are in the vicinity of the electronic device. In some examples, the electronic device and/or the server device may determine, based on the sensor data, a number of users in the vicinity of the electronic device.

For example, the electronic device may, upon obtaining a determination of a number of users (such as 2 users) being located in the vicinity of the electronic device, provide a resource associated with the number of users in the vicinity of the electronic device. For example, the electronic device may provide, based on the determination that a number of users (e.g., 2 users) are located in the vicinity of the electronic device, a resource (e.g., a meeting room) having a capacity corresponding with the number of users located in the vicinity of the electronic device, such as a meeting room having capacity for 2 persons, e.g., where the meeting room having a capacity for 2 persons is the first resource.

In one or more example electronic devices, the electronic device is configured to obtain presence data from a resource sensor at the resource, indicative of attendees at the resource. The presence data can be seen as data indicative of one or more attendees at the resource, such as indicative of a number of people at the resource associated with an event at the facility. For example, when the resource is a meeting room and the event is a meeting in that meeting room, the presence data may be indicative of a number of attendees present at the meeting. For example, the presence data may be obtained using a resource sensor (such as one or more resource sensors) at the resource, e.g., at the meeting room.

The resource sensors for example comprises a first resource sensor, a second resource sensor, a third resource sensor, etc. For example, any sensor of the one or more resource sensors may be a visual sensor, such as an optical sensor. A resource sensor may be one or more of: a camera, infra-red sensor, radar, and proximity sensor. In other words, the presence data can be seen as being indicative of a number of attendees currently at a resource, e.g., in a given meeting room. For example, the resource sensors can be seen configured to detect one or more attendees at a resource, e.g., present in a meeting room.

The presence data for example comprises first presence data, such as presence data obtained using the first resource sensor of the one or more resource sensors. The presence data for example comprises second presence data, such as presence data obtained using the second resource sensor of the one or more resource sensors. The presence data for example comprises third presence data, such as presence data obtained using the third presence sensor of the one or more sensors.

In some examples, the resource sensor may be a card access reader at the resource, e.g., a card access reader at a meeting room configured to grant access to the meeting room upon detected of a valid identity card.

In one or more example electronic devices, to obtain an estimation of a first resource comprises to obtain, based on the number of users in the vicinity of the electronic device, one or more resource parameters each corresponding with a resource of the one or more resources.

In some examples, to obtain one or more resource parameters each corresponding with a resource of the one or more resources comprises to obtain, based on the number of users in the vicinity of the electronic device and/or the presence data (such as the number of attendees at the resource), one or more resource parameters each corresponding with a resource of the one or more resources.

For example, the electronic device may provide, via the display interface, a user interface object based on the number of users in the vicinity of the electronic device. For example, when a number of attendees, e.g., 5 attendees, are at one resource (e.g., meeting room) and 5 users are in a vicinity of the electronic device (e.g., in-front of the display interface), that one resource may be estimated (e.g., by the electronic device and/or the server device) to be the first resource.

The same also applies to any group, such as split groups, e.g., of 3 and 2 users or people, such as different groups of people having different resources of interest. **In** one or more example embodiments, the attendance data may indicate that one or more attendees to an event at a resource are to attend the event online (such as non-physical attendance) and one or more attendees are to attend the event physically.

In one or more example electronic devices, the electronic device is configured to determine whether a resource score of the plurality of resource scores meets a first criterion. In other words, one or more resource scores of the plurality of resource scores may meet the first criterion.

In some examples, the electronic device is configured to determine whether each resource score of the plurality of resource scores meets a first criterion.

The first criterion is for example based on a first threshold. In some examples, whether the resource score satisfies the first criterion depends on whether the resource score is greater than or less than the first threshold. For example, when the resource score is greater than or equal to the first threshold, the first criterion can be seen as being satisfied by the resource score. For example, when the resource score is less than the first threshold, the first criterion can be seen as not being satisfied by the resource score. In one or more examples, the first threshold comprises a value.

In one or more example electronic devices, the electronic device is configured to, in accordance with the determination that the resource score meets the first criterion, provide via the display interface and based on the attendance data and resource information, a user interface object (such as the first user interface object) associated with the resource (such as the first resource) corresponding with the resource score for which the first criterion has been met.

In one or more example electronic devices, in accordance with the determination that the resource score does not meet the first criterion, refrain from providing via the display interface and based on the attendance data and resource information, a user interface object associated with the resource corresponding with the resource score for which the first criterion has been met.

The resource information can for example be seen as being indicative information on the one or more resources. The resource information for example comprises the first resource information, second resource information, third resource information, etc. For example, the second resource information may indicate that a second resource of the one or more resources is an estimated second resource of interest for the user, such as a resource with an estimated interest level to the user secondary to that of the first resource. For example, the third resource information may indicate that a third resource of the one or more resources is an estimated third resource of interest for the user, such as a resource with an estimated interest level to the user tertiary to that of the first resource. For example, the second resource information and the third resource information may have lower resource scores than the resource score of the first resource.

In some examples, the electronic device is configured to provide via the display interface and based on the attendance data and resource information, a plurality of user interface objects associated with the one or more resources corresponding with the resource score for which the first criterion has been met.

The user interface object, for example comprises the first user interface object, a second user interface object, a third user interface object. The first user interface is associated with the first resource. The second user interface is associated with the second resource. The third user interface is associated with the third resource. For example, the electronic device may be configured to provide, e.g., via the display interface, at any given time one or more user interface objects associated with the corresponding resources for which the corresponding resource score meets the first criterion.

In one or more example electronic devices, the electronic device is configured to determine whether the distance parameter meets a first time criterion.

The distance parameter for example comprises a time parameter. The time parameter is for example indicative of a period of time which the second criterion has been satisfied by the distance parameter. In other words, the time parameter is indicative of a period of time which one or more users have been located within a vicinity of the electronic device.

The first time criterion is for example based on a first time threshold. In some examples, whether the distance parameter satisfies the first time criterion depends on whether the distance parameter is greater than or less than the first time threshold. For example, when the distance parameter is greater than or equal to the first time threshold, the first time criterion can be seen as being satisfied by the distance parameter. For example, when the distance parameter is less than the first time threshold, the first time criterion can be seen as not being satisfied by the distance parameter. In one or more examples, the first time threshold comprises a value.

In one or more example electronic devices, the electronic device is configured to, in accordance with the distance parameter meeting the first time criterion, provide a primary display configuration. For example, the electronic device is configured to, in accordance with the distance parameter meeting the first time criterion, display a primary display configuration. For example, the electronic device is configured to, in accordance with the time parameter meeting the first time criterion, provide (such as display) a primary display configuration.

In one or more example electronic devices, the electronic device is configured to, in accordance with the distance parameter not meeting the first time criterion, refrain from providing a primary display configuration.

The primary display configuration (e.g., as shown in Fig. 7A) can for example be seen as a primary configuration according to which the electronic device displays the user interface objects. For example, the primary display configuration comprises the one or more user interface objects associated with the one or more resources, such as the first user interface object associated with the first resource.

The display configuration, such as the primary display configuration, can be seen as a user interface layout, e.g., upon which the positioning and/or features of one or more user interface objects is based, such as the first user interface object. In some examples, the zoom, distribution, shape, colour, layout (e.g., split screen), etc. of the user interface objects provided by the electronic device, e.g., by the display interface, may be based on the display configuration, such as the primary display configuration. In some examples, the display configuration can be seen as display formatting of the electronic device, such as a format according to which one or more user interface objects may be provided, e.g., display via the display interface of the electronic device.

In some examples, the electronic device may be configured to, in accordance with the distance parameter meeting the first time criterion, provide the primary display configuration for a given time period after the electronic device obtains a determination indicative of the second criterion not being met by the second criterion. In other words, the electronic device may be configured to provide the first user interface object for a time period after a user is not present in the vicinity of the electronic device. For example, the electronic device may be seen as being configured to hold the user interface object (such as the first user interface object, second user interface object, third user interface object, etc.) for a given time period after a user leaves the vicinity of the electronic device.

In some examples, the primary display configuration may be seen as a first configuration of a sequence of configurations. For example, the electronic device may be seen as providing a display configuration sequence, for example comprising a primary display configuration, secondary display configuration, a tertiary display configuration, etc. In some examples, the user interface objects associated with resources having higher resource scores may be provided earlier in the display configuration sequence. For example, the first user interface object may be provided in the primary display configuration as the first resource is the resource of the one or more resources having the highest resource score. In some examples, user interface objects associated with resources having higher resource scores may be provided for a longer time period, e.g., in the display configuration sequence. In other words, the electronic device may be configured to provide, such as display, user interface objects associated with resources having higher resource scores for longer than user interface objects associated with resources having lower resource scores.

In some examples, when a user approaches the display interface of the electronic device, an animation is triggered so that resource information, (e.g., relevant resource information to the user, such as the first resource information) of upcoming events associated with one or more resources is provided, such as displayed. For example, the animation may facilitate a transition between on or more display configurations. For example, any transition between any of the resource configurations, such as the primary resource configuration shown in Fig. 7A, secondary resource configuration shown in Fig. 7B, and tertiary resource configuration shown in Fig. 7C, may be performed, such as facilitated, using an animation. The resource configuration can for example be seen as a configuration of the one or more resource provided by the electronic device. In other words, the resource configuration can be seen as a display configuration of the one or more resources, as shown in Figs 7A-C.

In some examples, the electronic device may provide, based on the location of the electronic device (such as the display interface), the resource configuration and/or the one or more resources. The electronic device may for example obtain (such as determine) the location of the electronic device (e.g., the display interface), based on the facility data, e.g., facility data obtained from the server device and/or a database. The electronic device may for example be configured to provide, based on the location of the electronic device (e.g., based on the facility data), a resource configuration associated with the location of the electronic device. For example, when the electronic device is located on a given floor (such as the fourth floor), the electronic device may be configured to provide a resource configuration associated with the given floor (e.g., the resource configuration comprising one or more resources of the given floor). For example, an electronic device located on the fourth floor may provide a resource configuration representative of the fourth floor, such as representative of a layout and/or floorplan of the fourth floor (e.g., the resource configuration comprising one or more resources of the fourth floor). An electronic device located in a reception area of the facility may for example provide a resource configuration representative of a layout and/or floor plan of the entire facility (e.g., the resource configuration comprising one or more resources, such as meetings starting within a given time period, of the entire facility).

For example, an animation from idle to the primary display configuration may be triggered when the distance parameter meets a first time criterion. For example, an animation from the primary display configuration to the secondary display configuration may be triggered when the distance parameter meets a second time criterion. For example, an animation from the secondary display configuration to the tertiary display configuration may be triggered when the distance parameter meets a third time criterion.

The electronic device is for example configured to provide, e.g., via the display interface and based on the attendance data and the first resource information, one or more user interface objects associated with the one or more resources.

In one or more example electronic devices, the primary display configuration comprises one or more of: a first user interface object, second user interface object, third user interface object, etc.

In one or more examples, the electronic device may determine the display configuration based on the number of users in the vicinity of the electronic device. For example, when a plurality of users are in the vicinity of the electronic device, the electronic device may be configured to provide more user interface objects, e.g., associated with more resources, than for when there is only one user in the vicinity of the electronic device, such as a user that is not familiar with the facility, e.g., has not previously visited the facility.

In one or more example electronic devices, to provide the user interface object comprises to provide, based on the distance parameter, the first user interface object associated with the first resource. In other words, to provide, based on the distance of the user from the electronic device, the first user interface object associated with the first resource.

In some examples, to provide the first user interface object associated with the first resource comprises to provide, based on the time parameter, the first user interface object associated with the first resource.

For example, the longer a user has been located in the vicinity of the electronic device, such as in-front of the screen (e.g., looking at the screen), the electronic device may provide additional resource information, such as additional first resource information, to the user. For example, when a user has been in the vicinity of the electronic device only for a short time period, e.g., 2 seconds, the electronic device may display limited resource information. When the user has been in the vicinity of the electronic device only for a longer time period, e.g., 10 seconds, the electronic device may provide more detailed resource information to the user, such as more text, e.g., directions from the user location to the first resource that the user may follow.

In some examples, as the user gets closer to the electronic device, such as to the display interface, the electronic device may be configured to provide an increased amount of resource information.

In one or more example electronic devices, the facility comprises the one or more resources. In one or more example electronic devices, the one or more resources are associated with the event at the facility.

For example, the one or more resource may be located within the facility, such as in the area of the facility. In some examples, each of the one or more resources is associated with an event at the facility. For example, when the resources are meeting rooms, each meeting room may be associated with a given event, such as meeting. In some examples, one or more resources may be associated with one or more events at the facility. In some examples. a plurality of resources may be associated with a single event at the facility. For example, two meeting rooms may be associated with a single meeting at the facility, e.g., when there is a large number of attendees.

In some examples, a single resource may be associated with a plurality of resources. For example, one meeting room may be used for two meetings, e.g., when there is a small number of attendees.

In one or more example electronic devices, to obtain the attendance data comprises to obtain filtered historical attendance data associated with the one or more resources of the facility.

In one or more example electronic devices, to obtain filtered historical attendance data associated with the one or more resources of the facility comprises to obtain, from the server device, filtered historical attendance data associated with the one or more resources of the facility. In some examples, the electronic device is configured to filter the attendance data.

In one or more example electronic devices, the electronic device is configured to obtain, from a server device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the first time criterion, the filtered historical attendance data, and the presence data.

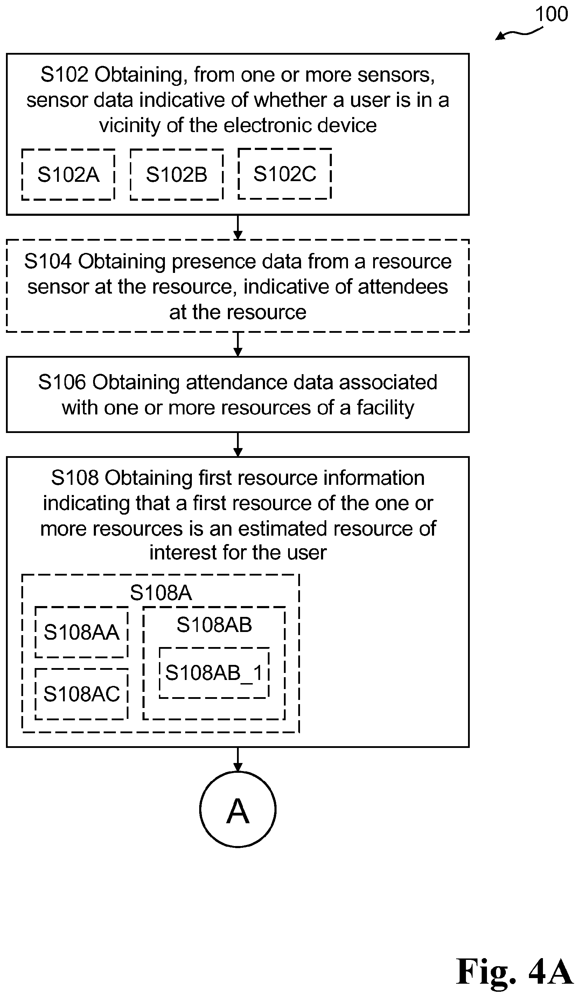

The electronic device 300 is optionally configured to perform any of the operations disclosed in Figs. 4A-B (such as any one or more of S102, S102A, S102B, S102C, S104, S106, S108, S108A, S108AA, S108AB, S108AB_1, S108AC, S110, S111, S112, S112A, S114, S115, S116, S118). The operations of the electronic device 300 may be embodied in the form of executable logic routines (for example, lines of code, software programs, etc.) that are stored on a non-transitory computer readable medium (for example, memory circuitry 301) and are executed by processor circuitry 302).

Furthermore, the operations of the electronic device 300 may be considered a method that the electronic device 300 is configured to carry out. Also, while the described functions and operations may be implemented in software, such functionality may also be carried out via dedicated hardware or firmware, or some combination of hardware, firmware and/or software. Memory circuitry 301 may be one or more of a buffer, a flash memory, a hard drive, a removable media, a volatile memory, a non-volatile memory, a random access memory (RAM), or other suitable device. In a typical arrangement, memory circuitry 301 may include a non-volatile memory for long term data storage and a volatile memory that functions as system memory for processor circuitry 302. Memory circuitry 301 may exchange data with processor circuitry 302 over a data bus. Control lines and an address bus between memory circuitry 301 and processor circuitry 302 also may be present (not shown in Fig. 2). Memory circuitry 301 is considered a non-transitory computer readable medium.

Memory circuitry 301 may be configured to store the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, first time criterion, the filtered historical attendance data, and/or the presence data in a part of the memory.

Fig. 3 shows a block diagram of an example server device 400 according to the disclosure. The server device 400 comprises memory circuitry 401, processor circuitry 402, and a wireless interface 403. The server device 400 may be configured to perform any of the methods disclosed in Fig. 2. The server device 400 is for example the server device disclosed herein. The server device may for example be seen as an electronic device configured for user guidance, such as to guide a user to a resource of interest. In some examples, the server device can be seen as an electronic device configured to provide a first user interface object to guide a user, such as to guide a user to a resource of interest. In some examples, the server device can be seen as a resource of interest estimation device.

The server device is configured to obtain sensor data indicative of whether a user is in a vicinity of an electronic device.

The server device is configured to determine, based on the sensor data, whether the user is in a vicinity of the electronic device.

The server device is configured to obtain attendance data associated with one or more resources of a facility. For example, the server device is configured to, in accordance with a determination that the user is in a vicinity of the electronic device, to obtain attendance data associated with one or more resources of a facility. For example, the server device is configured to, in accordance with a determination that the user is not in a vicinity of the electronic device, to refrain from obtaining attendance data associated with one or more resources of a facility.

The server device is configured to estimate, based on the attendance data and/or the sensor data, a first resource of the one or more resources being a resource of interest for the user.

For example, the server device is configured to, in accordance with a determination that the user is in a vicinity of the electronic device, estimate, based on the attendance data and/or the sensor data, a first resource of the one or more resources being a resource of interest for the user. For example, the server device is configured to, in accordance with a determination that the user is not in a vicinity of the electronic device, refrain from estimating, based on the attendance data and/or the sensor data, a first resource of the one or more resources being a resource of interest for the user.

The server device is configured to provide, to the electronic device, first resource information indicating that the first resource of the one or more resources is a resource of interest for the user. For example, the server device is configured to, in accordance with a determination that the user is in a vicinity of the electronic device, provide, to the electronic device, first resource information indicating that the first resource of the one or more resources is a resource of interest for the user. For example, the server device is configured to, in accordance with a determination that the user is not in a vicinity of the electronic device, refrain from providing, to the electronic device, first resource information indicating that the first resource of the one or more resources is a resource of interest for the user.

In one or more example server devices, the attendance data comprises one or more of: event data associated with the event at the facility, facility data indicative of a layout of the facility, location data indicative of the location of an attendee, and historical attendance data indicative of an attendance history associated with the one or more resources of the facility.

The server device may for example obtain the attendance data and/or the sensor data from the electronic device. In some examples, the server device may obtain the sensor data from the one or more sensors, such as directly from the one or more sensors. In some examples, the server device may obtain the attendance data from one or more databases and/or platforms. For example, the server device may obtain the event data from a calendar platform.

In one or more example server devices, to estimate the first resource comprises to obtain, based on the attendance data, one or more resource parameters each corresponding with a resource of the one or more resources.

In one or more example server devices, to estimate the first resource comprises to determine a comparison of the resource parameters.

In one or more example server devices, the one or more resource parameters comprise a plurality of resource scores each corresponding with a resource of the one or more resources.

In one or more example server devices, to obtain a comparison of the resource parameters comprises to obtain a comparison of the plurality of resource scores. In one or more example server devices, the first resource is the resource of the one or more resources having the highest resource score.

In one or more example server devices, the first resource having the highest resource score is the resource of the one or more resources that is estimated to be of the highest interest to the user.

In one or more example server devices, the sensor data is indicative of a number of users in the vicinity of the electronic device.

In one or more example server devices, to estimate the first resource comprises to obtain, based on the number of users in the vicinity of the electronic device, one or more resource parameters each corresponding with a resource of the one or more resources. In one or more example server devices, to estimate the first resource comprises to determine, based on the number of users in the vicinity of the electronic device, one or more resource parameters each corresponding with a resource of the one or more resources.

In one or more example server devices, the electronic device is configured to determine whether a resource score of the plurality of resource scores meets a first criterion.

In one or more example server devices, the electronic device is configured to, in accordance with the resource score of the plurality of resource scores meeting the first criterion, provide, to the electronic device, an information indicative of the first criterion being met by the resource score of the plurality of resource scores.

In one or more example server devices, the electronic device is configured to, in accordance with the resource score of the plurality of resource scores not meeting the first criterion, refrain from providing, to the electronic device, an information indicative of the first criterion being met by the resource score of the plurality of resource scores.

In one or more example server devices, to determine whether the user is in a vicinity of the electronic device comprises to determine, based on the sensor data, a distance parameter indicative of a distance of the user from the electronic device.

In one or more example server devices, to determine whether the user is in a vicinity of the electronic device comprises to determine whether the distance parameter meets a second criterion.

In one or more examples server devices, the server device is configured to determine whether the distance parameter meets a first time criterion.

In one or more example server devices, the server device is configured to, in accordance with the distance parameter meeting the first time criterion provide, to the electronic device, an indication that the distance parameter meets the first time criterion.

In one or more example server devices, the facility comprises the one or more resources. In one or more example server devices, the one or more resources are associated with an event at the facility.

In one or more example server devices, the server device may obtain presence data from a resource sensor at the resource, indicative of attendees at the resource.

In one or more example server devices, to obtain the historical attendance data comprises to obtain filtered historical attendance data associated with the one or more resources of the facility. In some examples, to obtain filtered historical attendance data comprises to filter the historical attendance data. In some examples, the server device is configured to filter the attendance data associated with one or more resources of a facility.

In some examples, an attendee of an event (e.g., a meeting) may have accepted an invitation to the event with attendees from located in different parts of the world. For example, to filter the historical attendance data comprises, when the event (e.g., the meeting) includes a remote attendance link and/or occurs at a resource and/or facility that the registered attendee has not visited previously, the server device may determine (such as assume) that the user will not attend physically. For example, whether the registered attendee has previously attended an event at the resource and/or facility may be determined based on the historical attendee data.

In some examples, to obtain filtered historical attendance data associated with the one or more resources of the facility comprises to filter historical attendance data based on whether the attendee is determined to attend the event physically, such as in person.

In an example of a plurality of resources being assigned to an event, one of the resources being in the location of the organizer of the meeting, the server device (and/or the electronic device) may determine, such as assume, that one or more registered attendees will not attend physically.

In one or more examples, the server device may determine, based on time zone data associated with the attendee, that a registered attendee of the event will physically attend the event. The attendance data may for example comprise the time zone data associated an attendee, such as a registered attendee. The time zone data may comprise information indicative of the time zone of a device of the registered attendee. For example, the time zone data may be obtained from a calendar platform associated with the attendee. The time zone data is for example indicative of the location of the attendee. For example, when the time zone data does not match with a time zone associated with the location of the event, then the server device may determine that the attendee will not physically attend the event. In some examples, when the time zone data associated with the changes to match the time zone associated with the location of the event, the server device may determine that the user will physically attend the event, such as attend the event in person.

In one or more examples, the location data comprises GPS data indicative of a location of an attendee, such as a registered attendee of the event. For example, server device (and/or the electronic device) may determine that, upon the location data (e.g., GPS data) indicating that the attendee is within a given range of the location of the event, resource, and/or facility, the attendee will attend the event, such as attend the event in person.

In one or more example server devices, the server device (and/or the electronic device) may determine that, when a device (e.g., a personal electronic device such as a smartphone or laptop) associated with an attendee has connected to a network local (e.g., WiFi and/or mesh network) to the facility associated with the event, that the attendee associated with that device will attend the event.

In one or more example server devices, the server device is configured to provide, to an electronic device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the first time criterion, the filtered historical attendance data, and the presence data.

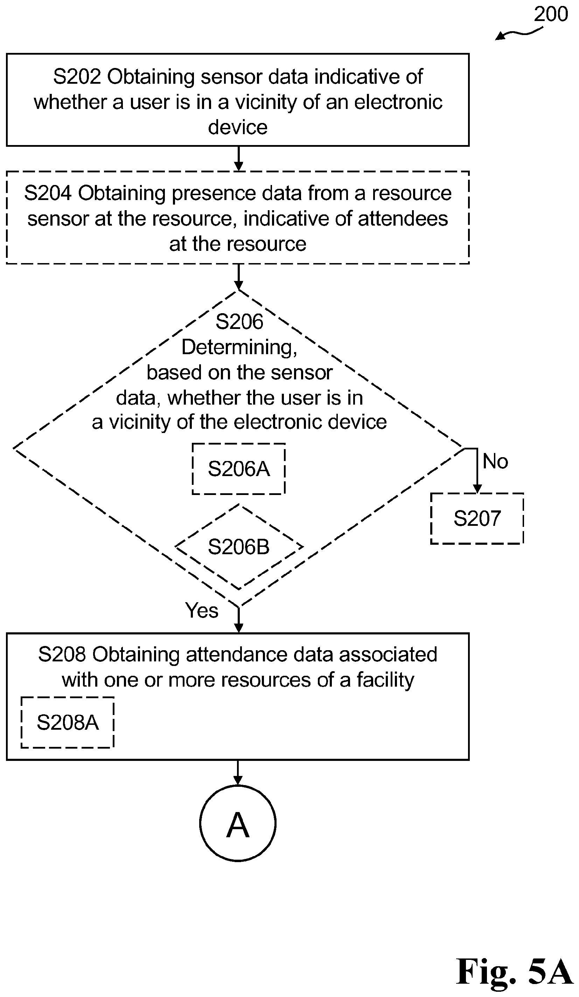

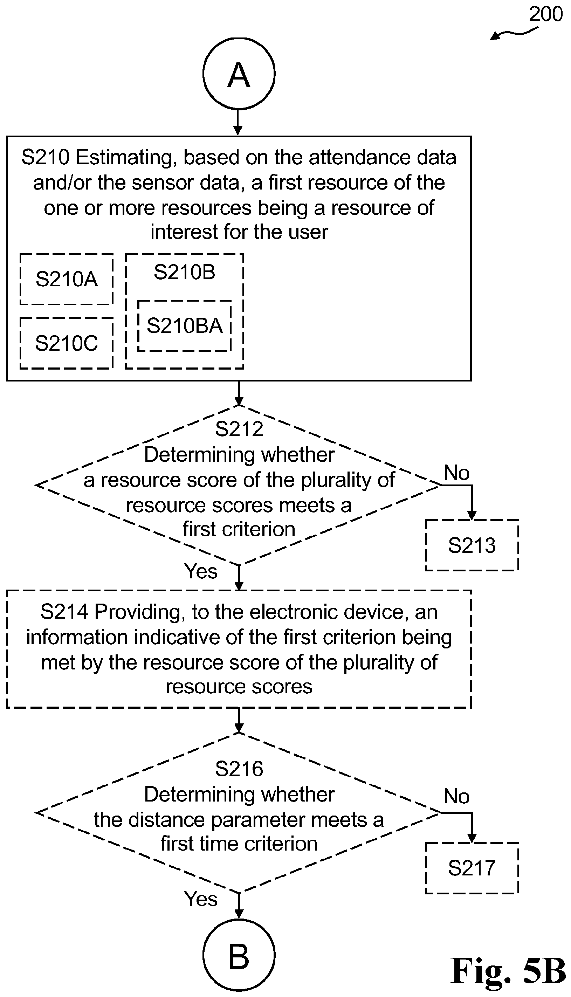

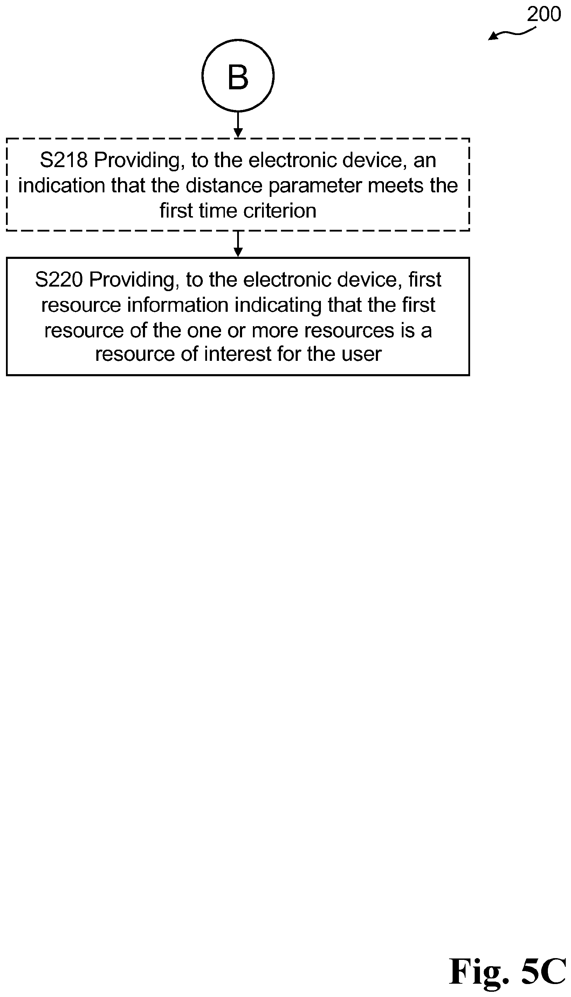

Processor circuitry 402 is optionally configured to perform any of the operations disclosed in Figs. 5A-C (such as any one or more of S202, S204, S206, S206A, S206B, S207, S208, S208A, S210, S210A, S210B, S210BA, S210C, S212, S213, S214, S216, S217, S218, S220). The operations of the server device 400 may be embodied in the form of executable logic routines (for example, lines of code, software programs, etc.) that are stored on a non-transitory computer readable medium (for example, memory circuitry 401) and are executed by processor circuitry 402).

Furthermore, the operations of the server device 400 may be considered a method that the server device 400 is configured to carry out. Also, while the described functions and operations may be implemented in software, such functionality may also be carried out via dedicated hardware or firmware, or some combination of hardware, firmware and/or software.

Memory circuitry 401 may be one or more of a buffer, a flash memory, a hard drive, a removable media, a volatile memory, a non-volatile memory, a random access memory (RAM), or other suitable device. In a typical arrangement, memory circuitry 401 may include a non-volatile memory for long term data storage and a volatile memory that functions as system memory for processor circuitry 402. Memory circuitry 401 may exchange data with processor circuitry 402 over a data bus. Control lines and an address bus between memory circuitry 401 and processor circuitry 402 also may be present (not shown in Fig. 3). Memory circuitry 401 is considered a non-transitory computer readable medium.

Memory circuitry 401 may be configured to store the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, first time criterion, the filtered historical attendance data, and/or the presence data in a part of the memory.

It may be appreciated that any of the definitions and terms used in the description of Fig. 2 may also apply to the description of Fig. 1, Fig. 3, Figs. 4A-4B, Figs. 5A-5C, Fig. 6, and Figs. 7A-7C and vice versa. For example, any definitions and terms associated with the electronic device disclosed herein may also apply and/or be used to the definitions and terms relating to the server device, the system, and the method performed by the server device as disclosed herein and vice versa.

Figs. 4A-B show a flow diagram of an example method 100, performed by an electronic device according to the disclosure, for providing a first user interface object. The electronic device is the electronic device disclosed herein, such as electronic device 300 of Fig. 1 and Fig. 2.

In some examples, the method 100 performed by the electronic device can be seen as a method for user guidance, such as to guidance of a user to a resource of interest. In some examples, the method 100 performed by the electronic device can be seen as a method for providing a first user interface object for guidance of a user, such as to guide a user to a resource of interest.

The method 100 comprises obtaining S102, from one or more sensors, sensor data indicative of whether a user is in a vicinity of the electronic device.

The method 100 comprises obtaining S106 attendance data associated with one or more resources of a facility.

The method 100 comprises, in accordance with the sensor data indicating that a user is in the vicinity of the electronic device, obtaining S108 first resource information indicating that a first resource of the one or more resources is an estimated resource of interest for the user.

The method 100 comprises, in accordance with the sensor data indicating that a user is in the vicinity of the electronic device, providing S118 via the display interface and based on the attendance data and the first resource information, a first user interface object associated with the first resource.

In one or more example methods, the attendance data comprises one or more of: event data associated with an event at the facility, facility data indicative of a layout of the facility, location data indicative of the location of an attendee, and historical attendance data indicative of an attendance history associated with the one or more resources of the facility.

In one or more example methods, obtaining S108 first resource information comprises obtaining S108A, based on the attendance data, an estimation of a first resource of the one or more resources being a resource of interest for the user.

In one or more example methods, obtaining S108A an estimation of a first resource comprises obtaining S108AA, based on the attendance data, one or more resource parameters each corresponding with a resource of the one or more resources.

In one or more example methods, obtaining S108A an estimation of a first resource comprises obtaining S108AB a comparison of the resource parameters.

In one or more example methods, the one or more resource parameters comprise a plurality of resource scores each corresponding with a resource of the one or more resources.

In one or more example methods, obtaining S108AB a comparison of the resource parameters comprises obtaining S108AB_1 a comparison of the plurality of resource scores, wherein the first resource is the resource of the one or more resources having the highest resource score.

In one or more example methods, the first resource having the highest resource score is the resource of the one or more resources that is estimated to be of the highest interest to the user.

In one or more example methods, the sensor data is indicative of a number of users in the vicinity of the electronic device.

In one or more example methods, obtaining S108A an estimation of a first resource comprises obtaining S108AC, based on the number of users in the vicinity of the electronic device, one or more resource parameters each corresponding with a resource of the one or more resources.

In one or more example methods, the method 100 comprises determining S110 whether a resource score of the plurality of resource scores meets a first criterion.

In one or more example methods, the method 100 comprises, in accordance with determining that the resource score meets the first criterion, providing S112 via the display interface and based on the attendance data and resource information, a user interface object associated with the resource corresponding with the resource score for which the first criterion has been met.

In one or more example methods, the method 100 comprises, in accordance with determining that the resource score does not meet the first criterion, refraining S111 from providing via the display interface and based on the attendance data and resource information, a user interface object associated with the resource corresponding with the resource score for which the first criterion has been met.

In one or more example methods, obtaining S102 sensor data indicative of whether the user is in the vicinity of the electronic device comprises obtaining S102A, based on the sensor data, a distance parameter indicative of a distance of the user from the electronic device.

In one or more example methods, obtaining S102 sensor data indicative of whether the user is in a vicinity of the electronic device, comprises S102B obtaining a determination of whether the distance parameter meets a second criterion.

In one or more example methods, the method 100 comprises determining S114 whether the distance parameter meets a first time criterion.

In one or more example methods, the method 100 comprises, in accordance with the distance parameter meeting the first time criterion, providing S116 a primary display configuration.

In one or more example methods, the method 100 comprises, in accordance with the distance parameter not meeting the first time criterion, refraining S115 from providing a primary display configuration.

In one or more example methods, providing S112 the user interface object comprises providing S112A, based on the distance parameter, the first user interface object associated with the first resource.

In one or more example methods, the facility comprises the one or more resources and/or wherein the one or more resources are associated with the event at the facility.

In one or more example methods, the method 100 comprises obtaining S104 presence data from a resource sensor at the resource, indicative of attendees at the resource.

In one or more example methods, obtaining S102 the attendance data comprises obtaining S102C filtered historical attendance data associated with the one or more resources of the facility.

In one or more example methods, the method 100 comprises obtaining, from a server device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the first time criterion, the filtered historical attendance data, and the presence data.

Figs. 5A-C show a flow diagram of an example method 200, performed by a server device according to the disclosure, for providing a first user interface object. The server device is the server device disclosed herein, such as server device 400 of Fig. 1 and Fig. 3.

In some examples, the method 200 performed by the server device can be seen as a method for user guidance, such as to guidance of a user to a resource of interest. In some examples, the method 200 performed by the server device can be seen as a method for providing a first user interface object for guidance of a user, such as to guide a user to a resource of interest. In some examples, the method 200 performed by the server device can be seen as a method for estimating a first resource of the one or more being a resource of interest for the user. In other words, the method 200 performed by the server device can for example be seen as a method for estimating a resource of interest for the user.

The method 200 comprises determining S206, based on the sensor data, whether the user is in a vicinity of the electronic device.

The method 200 comprises obtaining S208 attendance data associated with one or more resources of a facility. The method 200 for example comprises, upon determining that the user is in a vicinity of the electronic device, obtaining S208 attendance data associated with one or more resources of a facility. The method 200 for example comprises, upon determining that the user is not in a vicinity of the electronic device, refraining S207 from obtaining attendance data associated with one or more resources of a facility.

The method 200 comprises estimating S210, based on the attendance data and/or the sensor data, a first resource of the one or more resources being a resource of interest for the user. The method 200 for example comprises, upon determining that the user is in a vicinity of the electronic device, estimating S210, based on the attendance data and/or the sensor data, a first resource of the one or more resources being a resource of interest for the user. The method 200 for example comprises, upon determining that the user is not in a vicinity of the electronic device, refraining from estimating, based on the attendance data and/or the sensor data, a first resource of the one or more resources being a resource of interest for the user. In some examples, estimating S210 a first resource of the one or more resources being a resource of interest for the user comprises selecting based on the attendance data and/or the sensor data, a first resource of the one or more resources being a resource of interest for the user.

The method 200 comprises providing S220, to the electronic device, first resource information indicating that the first resource of the one or more resources is a resource of interest for the user.

In one or more example methods, the attendance data comprises one or more of: event data associated with the event at the facility, facility data indicative of a layout of the facility, location data indicative of the location of an attendee, and historical attendance data indicative of an attendance history associated with the one or more resources of the facility.

In one or more example methods, estimating S210 the first resource comprises obtaining S210A, based on the attendance data, one or more resource parameters each corresponding with a resource of the one or more resources.

In one or more example methods, estimating S210 the first resource comprises determining S210B a comparison of the resource parameters.

In one or more example methods, determining S210B a comparison of the resource parameters comprises obtaining S210BA a comparison of the plurality of resource scores, wherein the first resource is the resource of the one or more resources having the highest resource score.

In one or more example methods, the first resource having the highest resource score is the resource of the one or more resources that is estimated to be of the highest interest to the user.

In one or more example methods, the sensor data is indicative of a number of users in the vicinity of the electronic device.

In one or more example methods, estimating S210B the first resource comprises obtaining S210C, based on the number of users in the vicinity of the electronic device, one or more resource parameters each corresponding with a resource of the one or more resources.

In one or more example methods, the method 200 comprises determining S212 whether a resource score of the plurality of resource scores meets a first criterion.

In one or more example methods, the method 200 comprises, in accordance with the resource score of the plurality of resource scores meeting the first criterion, providing S214, to the electronic device, an information indicative of the first criterion being met by the resource score of the plurality of resource scores. The method 200 for example comprises, in accordance with the resource score of the plurality of resource scores not meeting the first criterion, refraining S213 from providing, to the electronic device, an information indicative of the first criterion being met by the resource score of the plurality of resource scores.

In one or more example methods, determining S206 whether the user is in a vicinity of the electronic device comprises determining S206A, based on the sensor data, a distance parameter indicative of a distance of the user from the electronic device.

In one or more example methods, determining S206 whether the user is in a vicinity of the electronic device comprises determining S206B whether the distance parameter meets a second criterion.

In one or more example methods, the method 200 comprises determining S216 whether the distance parameter meets a first time criterion.

In one or more example methods, the method 200 comprises, in accordance with the distance parameter meeting the first time criterion, providing S218, to the electronic device, an indication that the distance parameter meets the first time criterion.

The method 200 for example comprises in accordance with the distance parameter not meeting the first time criterion, refraining S217 from providing, to the electronic device, an indication that the distance parameter meets the first time criterion.

In one or more example methods, the facility comprises the one or more resources and/or wherein the one or more resources are associated with an event at the facility.

In one or more example methods, the method 200 comprises obtaining S204 presence data from a resource sensor at the resource, indicative of attendees at the resource.

In one or more example methods, obtaining S208 the attendance data comprises obtaining S208A filtered historical attendance data associated with the one or more resources of the facility.

In one or more example methods, the method 200 comprises providing, to an electronic device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the first time criterion, the filtered historical attendance data, and the presence data.

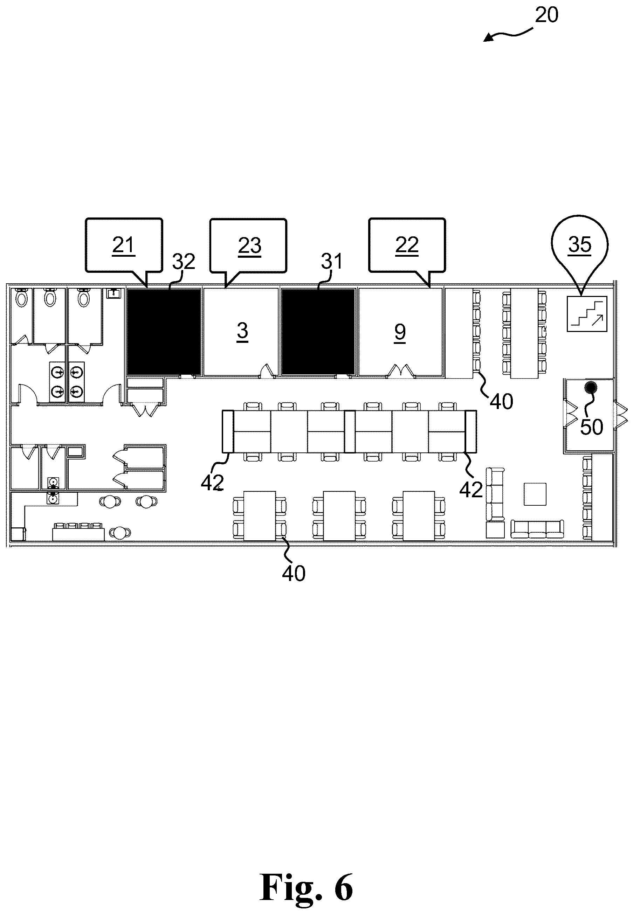

Fig. 6 is a schematic diagram illustrating an example embodiment according to this disclosure where a technique as disclosed herein is applied.

Fig. 6 illustrates an example user interface, such as an example layout, to be displayed on a display interface of an electronic device as disclosed herein.

Fig. 6 shows one or more resources associated with one or more events at the facility. The facility may for example be a building. Fig. 6 shows a layout 20 of a given floor (such as the third floor) of the facility, e.g., a given floor in the building. The layout 20 of the facility comprises meeting rooms 3, 9, 31, and 32, where each meeting room is a resource of the one or more resources. The layout 20 comprises a user interface object 50 indicative of the location of the user in the facility. In some examples, the user interface object 50 is indicative of the location of the electronic device in the facility. Fig. 6 shows a first user interface object 35 associated with a first resource.

Prior to providing the first user interface object 35 the electronic device has obtained, from one or more sensors, sensor data indicative of whether a user is in a vicinity of the electronic device. The one or more sensors may be of the electronic device and/or located at the facility.

Prior to providing the first user interface object 35 the electronic device has obtained attendance data associated with one or more resources of a facility. The layout 20 may be obtained with the attendance data, such as the layout 20 may have formed part of facility data indicative of a layout of the facility.

In accordance with the sensor data indicating that a user is in the vicinity of the electronic device, the electronic device has, prior to providing the first user interface object, obtained first resource information indicating that a first resource of the one or more resources is an estimated resource of interest for the user.

In accordance with the sensor data indicating that a user is in the vicinity of the electronic device, the electronic device provides via the display interface and based on the attendance data and the first resource information, the first user interface object 35 associated with the first resource.

Fig. 6 shows user interface objects 21, 22, and 23. The user interface object 21 for example indicates to a user that a meeting is starting in 10 minutes in meeting room 32. The user interface object 21 for example comprises information indicative of the event, e.g., the meeting, that is starting in 10 minutes in meeting room 32, such as the name of the meeting. For example, the user interface object 21 comprises information indicative of one or more of the attendees of the meeting starting in 10 minutes, e.g., profile picture, name, contact details, etc.

The electronic device may for example be configured to display the meeting rooms 31 and/or 32 with a highlight, colour (such as change in hue, saturation and/or brightness), pattern, border, visual grouping (e.g., Gestalt principles), placement, positioning, etc., that is different to that of one or more of the non-occupied meeting rooms 3 and 9. Meeting rooms 31 and 32 are coloured differently to, such as darker than, the other meeting rooms to indicate that these meeting rooms 31,32 are currently occupied. The electronic device may for example determine whether the meeting rooms are currently occupied based on the attendance data and/or the presence data. The attendance data and/or presence data may for example be updated over time, e.g., updated periodically over time.

The user interface object 22 for example indicates to a user that a meeting is starting in 3 minutes in meeting room 9. The user interface object 22 for example comprises information indicative of the event, e.g., the meeting, that is starting in 3 minutes in meeting room 9, such as the name of the meeting. For example, the user interface object 22 comprises information indicative of one or more of the attendees of the meeting starting in 3 minutes, e.g., profile picture, name, contact details, etc. As shown in Fig. 6, the meeting room 9 is currently available.

The user interface object 23 for example indicates to a user that the meeting room 3 is available in 5 minutes. In other words, the electronic device may be configured to provide a user interface object indicative of an occupied resource being available within a given time period, e.g., within the next 5 minutes. As room 3 will shortly be available, it is shown as being available, such as displayed in a lighter colour than meeting rooms 31 and 32. The user interface object 23 may for example indicate that a meeting is starting within the next 15 minutes.

Fig. 6 shows one or more seats 40 and/or desks 42, these seats and/or desks being resources of the facility. The one or more seats 40 and/or desks 42 may be displayed such a way that indicates whether the one or more seats 40 and/or desks 42 are occupied or available.

Fig. 6 can be seen as showing a layout 20 of the third floor of the facility. For example, a user (such as a newly employed user new to the facility, e.g., when the facility is a place of employment such as a company building) may need to find a meeting room for a meeting named "sync meeting". The meeting room is on floor 4 and the user (e.g., the employee) is currently on floor 3, as indicated by the user interface object 50.

The user may approach a display interface of the electronic device on floor 3. On the display interface the employee sees user interface objects, such as user interface objects 21 and 22 appearing for the rooms that have upcoming meetings in the next few minutes on this floor. For example, only user interface objects for meetings that are starting in next 15 minutes are displayed. For example, on floor 3 the electronic device may be configured prioritize display of meetings starting in 15 minutes or less.

The electronic device may obtain, e.g., based on attendance data, such as location data, information indicative of the user not having been to floor 4 of the facility and/or not having previously been to the meeting room. In some examples, the electronic device may obtain information, based on the attendance data, information indicative of the user being newly employed, e.g., when the facility is a company building.

The system assumes that a user that has not been to floor 4 of the facility and/or not having been to the meeting room is new to the system is more likely to approach the display. The electronic device therefore prioritizes displaying this meeting, e.g., one or more resources associated with this meeting will correspond with a higher resource score than other meetings where attendees have previously attended meetings at the meeting room where they are to attend a meeting for at least the second time.

For example, a first user interface object 35 showing "sync meeting floor 4" appears next to the stairs. The first user interface object 35 can for example be seen as guiding the user to the estimated resource of interest for the user, e.g., to the fourth floor via the stairs. In other words, the electronic device can be seen as guiding, e.g., using the first user interface object 35, the user to the estimated resource of interest for the user.

The user may then move up to floor 4 and view the display interface of the electronic device on floor 4 to see "sync meeting" appear as a part of a first user interface object provided by the electronic device on the fourth floor, such as the same floor as the estimated resource of interest of the user (e.g., the first resource). The electronic devices on the third and fourth floor are part of the system, such as a facility guidance system (e.g., a meeting room guidance system).

In some examples, the electronic device may be configured to determine whether a user in the vicinity of the electronic device is a user to which an electronic device of the plurality of electronic devices in the system has provided a first user interface object. In other words, a second electronic device of the system may be configured to determine, e.g., based on the location data, whether a user is moving from a first electronic device, e.g., from a vicinity of the first electronic device.

For example, the first electronic device of the system may communicate to the second electronic device of the system that a first user interface object associated with the first resource has been provided to the user. In some examples, the second electronic device is configured to provide, based on the location data, facility data, and/or the communication indicating that the first electronic device has provided to the user a first user interface object associated with the first resource, the first resource information.

In some examples, the facility data comprises information indicative of a time period (such as an average time period) for a user to move from a first electronic device of the system to a second electronic device of the system. The second electronic device may for example be configured to provide, based on the time period for a user to move from the first electronic device to the second electronic device, the first user interface object. In other words, the second electronic device may for example provide the first user interface object to the user in accordance with a predicted arrival time of the user at the second electronic device, the predicted arrival time for example being determined, such as predicted, based on the facility data.

For example, when the first electronic device is located on the third floor and the second electronic device is located on the fourth floor, the electronic device may provide, based on a predicted time of arrival of the user at the second electronic device, the first user interface object. In some examples, the second electronic device may, upon determining that the distance parameter meets the second criterion within a given time range of the predicted time of arrival of the user at the second electronic device, provide the first user interface object, such as the same user interface object that was provided to the user by the first electronic device.

In one or more example electronic devices, the first electronic device may for example be configured to provide, such as indicate, the location of the second electronic device, e.g., to a user of the first electronic device. In other words, the first electronic device may guide a user to the second electronic device. For example, to provide the first user interface object may comprise to provide a location of the second electronic device of the system.

Figs. 7A-C show schematic diagrams illustrating an example embodiment according to this disclosure where a technique as disclosed herein is applied.

Fig. 7A illustrates a primary example user interface, such as an example layout or display configuration, comprising a first user interface object as disclosed herein to be displayed on a display interface of an electronic device as disclosed herein.

Fig. 7B illustrates a secondary example user interface, such as an example layout or display configuration, comprising a first user interface object as disclosed herein to be displayed on a display interface of an electronic device as disclosed herein.

Fig. 7C illustrates a tertiary example user interface, such as an example layout or display configuration, comprising a first user interface object as disclosed herein to be displayed on a display interface of an electronic device as disclosed herein.

Figs. 7A-C show a primary display configuration 61, a secondary display configuration 62, and a tertiary display configuration 63 respectively.

The primary display configuration 61, the secondary display configuration 62, and the tertiary display configuration 63 may be based on the attendance data and the first resource information as disclosed herein.

In other words, the electronic device may provide, such as display via the display interface, the primary display configuration 61, the secondary display configuration 62, and/or the tertiary display configuration 63 based on the attendance data and the first resource information as disclosed herein.

In one or more example embodiments, the electronic device may provide, such as display via the display interface, the primary display configuration 61, the secondary display configuration 62, and/or the tertiary display configuration 63 based on the sensor data as disclosed herein.

In one or more example embodiments, the electronic device may obtain, from a server device as disclosed herein, the primary display configuration 61, the secondary display configuration 62, and/or the tertiary display configuration 63 and display them via the display interface.

In one or more example embodiments, the electronic device may determine and/or generate, using the processors circuitry, the primary display configuration 61, the secondary display configuration 62, and/or the tertiary display configuration 63 and display them via the display interface.

It may be appreciated that the provision of the primary display configuration 61, the secondary display configuration 62, and/or the tertiary display configuration 63 may be triggered in accordance with the sensor data indicating that a user is in the vicinity of the electronic device.

The primary display configuration 61 comprises one or more primary user interface objects. The primary display configuration 61 comprises a first primary user interface object 71A, a second primary user interface object 72A, a third primary user interface object 73A, a fourth primary user interface object 74A, and a fifth primary user interface object 75A. The primary display configuration 61 comprises the user interface object 50 indicative of the location of the user in the facility. For example, the electronic device may be configured to fade in the presence of the user interface object 50, e.g., from a moment when the electronic device determines that a user is in the vicinity of the electronic device.

The first primary user interface object 71A is associated with, such as indicative of, a first resource, such as an estimated resource of interest to the user. The second primary user interface object 72A is associated with, such as indicative of, a second resource of the one or more resources of the facility. The third primary user interface object 73A is associated with, such as indicative of, a third resource of the one or more resources of the facility. The fourth primary user interface object 74A is associated with, such as indicative of, a fourth resource of the one or more resources of the facility. The fifth primary user interface object 75A is associated with, such as indicative of, of a fifth resource of the one or more resources of the facility.

In other words, each of the primary interface objects 71A,72A,73A,74A, and 75A are associated with a meeting room, e.g., of a given floor of the facility, such as the floor at which the display interface of the electronic device is configured to display. A meeting room can be seen as a resource, such as a resource of the facility.

The first primary user interface object 71A is for example a first user object according to this disclosure. The primary user interface objects 72A, 73A, 74A, and 75A are for example optionally displayed by the electronic device. The primary user interface objects 72A, 73A, 74A, and 75A are for example displayed to enable a user to have spatial awareness of the facility. In other words, the electronic device may provide the primary user interface objects 72A, 73A, 74A, and 75A such that layout that the user sees on the display interface corresponds with the reality of their surroundings.

The one or more primary user interface objects 71A, 72A, 73A, 74A, and 75A shown in Fig. 7A may indicate the same resource as the one or more secondary user interface objects 71B, 72B, 73B, 74B, and 75B shown in Fig. 7B, and/or the one or more tertiary user interface objects 71C, 72C, 73C, 74C, and 75C shown in Fig. 7C.

The electronic device, such as the display interface, may for example provide, to the user, the primary display configuration 61 when the user has been in the vicinity of the electronic device for 0.5 seconds or more.

For example, in Fig. 7A, the first time threshold upon which the first time criterion is based is 0.5 seconds. For example, in accordance with the distance parameter meeting the first time criterion, the electronic device is configured to provide the primary display configuration 61, e.g., comprising the primary user interface objects 71A,72A,73A,74A, and 75A.

The secondary display configuration 62 comprises one or more secondary user interface objects. The secondary display configuration 62 comprises a first secondary user interface object 71B, a second secondary user interface object 72B, a third secondary user interface object 73B, a fourth secondary user interface object 74B, and a fifth secondary user interface object 75B.

The one or more secondary user interface objects 71B, 72B, 73B, 74B, and 75B shown in Fig. 7B may indicate the same resource as the one or more primary user interface objects 71A, 72A, 73A, 74A, and 75A shown in Fig. 7A, and/or the one or more tertiary user interface objects 71C, 72C, 73C, 74C, and 75C shown in Fig. 7C.

The first secondary user interface object 72A is for example a first user object according to this disclosure. The secondary user interface objects 72B, 73B, 74B, and 75B are for example optionally displayed by the electronic device. The secondary user interface objects 72B, 73B, 74B, and 75B are for example displayed to enable a user to have spatial awareness of the facility. In other words, the electronic device may provide the secondary user interface objects 72B, 73B, 74B, and 75B such that layout that the user sees on the display interface corresponds with the reality of their surroundings.

The secondary display configuration 62 comprises a secondary user interface object 45 corresponding with the third secondary user interface object 73B. The secondary user interface object 45 for example provides information (e.g., guidance) associated with the meeting room corresponding with the third secondary user interface object 73B. For example, the secondary user interface object 45 may indicate a start-time of an event (e.g., a meeting) associated with the resource corresponding with the third secondary user interface object 73B. For example, the secondary user interface object 45 may indicate, e.g., to a user, information indicative of one or more of the attendees of the meeting in the meeting room associated with the third secondary user interface object 73B that has an upcoming start time, e.g., attendee profile picture, attendee name, attendee contact details, etc.

The secondary display configuration 62 comprises a secondary user interface object 46 corresponding with the fourth secondary user interface object 74B. The secondary user interface object 46 for example provides information (e.g., guidance) associated with the meeting room corresponding with the fourth secondary user interface object 74B. For example, the secondary user interface object 46 may indicate a start-time of an event (e.g., a meeting) associated with the resource corresponding with the fourth secondary user interface object 74B. For example, the secondary user interface object 46 may indicate to a user information indicative of one or more of the attendees of the meeting in the meeting room associated with the fourth secondary user interface object 74B that that has an upcoming start time, e.g., attendee profile picture, attendee name, attendee contact details, etc.

The secondary display configuration 62 comprises a secondary user interface object 47 corresponding with the fifth secondary user interface object 75B. The secondary user interface object 47 for example provides information (e.g., guidance) associated with the meeting room corresponding with the fifth secondary user interface object 75B. For example, the secondary user interface object 47 may indicate a start-time of an event (e.g., a meeting) associated with the resource corresponding with the fifth secondary user interface object 75B. For example, the secondary user interface object 47 may indicate to a user information indicative of one or more of the attendees of the meeting in the meeting room associated with the fifth secondary user interface object 75B that that has an upcoming start time, e.g., attendee profile picture, attendee name, attendee contact details, etc.

Each of the secondary interface objects 71B,72B,73B,74B, and 75B are associated with a meeting room, e.g., of a given floor of the facility, such as the floor at which the display interface of the electronic device is configured to display. A meeting room can be seen as a resource, such as a resource of the facility. The secondary display configuration 61 comprises the user interface object 50 indicative of the location of the user in the facility.

The electronic device, such as the display interface, may for example provide, to the user, the secondary display configuration 62 when the user has been in the vicinity of the electronic device for 1.5 seconds or more. For example in Figs. 7B, the second time threshold upon which the second time criterion is based is 1.5 seconds. For example, in accordance with the distance parameter meeting the second time criterion, the electronic device is configured to provide the secondary display configuration 62, e.g., comprising the secondary user interface objects 71B,72B,73B,74B,75B, and the corresponding secondary user interface objects 45, 46, and 47. The electronic device may for example be configured to fade in one or more of the secondary user interface objects 45, 46 and/or 47, e.g., upon the second time criterion being satisfied by the distance parameter, such as by the time parameter.

The tertiary display configuration 63 comprises one or more tertiary user interface objects. The tertiary display configuration 63 comprises a first tertiary user interface object 71C, a second tertiary user interface object 72C, a third tertiary user interface object 73C, a fourth tertiary user interface object 74C, and a fifth tertiary user interface object 75C.

The one or more tertiary user interface objects 71C, 72C, 73C, 74C, and 75C shown in Fig. 7C may indicate the same resource as the one or more primary user interface objects 71A, 72A, 73A, 74A, and 75A shown in Fig. 7A, and/or the one or more secondary user interface objects 71B, 72B, 73B, 74B, and 75B shown in Fig. 7B.

The first tertiary user interface object 71C is for example a first user object according to this disclosure. The tertiary user interface objects 72C, 73C, 74C, and 75C are for example optionally displayed by the electronic device. The tertiary user interface objects 72C, 73C, 74C, and 75C are for example displayed to enable a user to have spatial awareness of the facility. In other words, the electronic device may provide the tertiary user interface objects 72C, 73C, 74C, and 75C such that layout that the user sees on the display interface corresponds with the reality of their surroundings.

The tertiary display configuration 63 comprises a tertiary user interface object 52 corresponding with the third tertiary user interface object 73C. The tertiary user interface object 52 for example provides information (e.g., guidance) associated with the meeting room corresponding with the third secondary user interface object 73C. For example, the tertiary user interface object 52 may indicate a start-time of an event (e.g., a meeting) associated with the resource corresponding with the third tertiary user interface object 73C. For example, the tertiary user interface object 52 may indicate, e.g., to a user, information indicative of one or more of the attendees of the meeting in the meeting room associated with the third tertiary user interface object 73C that has an upcoming start time, e.g., attendee profile picture, attendee name, attendee contact details, etc.

The tertiary display configuration 63 comprises a tertiary user interface object 53 corresponding with the fourth tertiary user interface object 74C. The tertiary user interface object 53 for example provides information (e.g., guidance) associated with the meeting room corresponding with the fourth tertiary user interface object 74C. For example, the tertiary user interface object 53 may indicate a start-time of an event (e.g., a meeting) associated with the resource corresponding with the fourth tertiary user interface object 74C. For example, the tertiary user interface object 53 may indicate to a user information indicative of one or more of the attendees of the meeting in the meeting room associated with the fourth tertiary user interface object 74C that that has an upcoming start time, e.g., attendee profile picture, attendee name, attendee contact details, etc.

The tertiary display configuration 63 comprises a tertiary user interface object 54 corresponding with the fifth tertiary user interface object 75C. The tertiary user interface object 54 for example provides information (e.g., guidance) associated with the meeting room corresponding with the fifth tertiary user interface object 75C. For example, the tertiary user interface object 54 may indicate a start-time of an event (e.g., a meeting) associated with the resource corresponding with the fifth tertiary user interface object 75C. For example, the tertiary user interface object 54 may indicate to a user information indicative of one or more of the attendees of the meeting in the meeting room associated with the fifth tertiary user interface object 75C that that has an upcoming start time, e.g., attendee profile picture, attendee name, attendee contact details, etc.

Each of the tertiary interface objects 71C,72C,73C,74C, and 75C are associated with a meeting room, where each meeting room is a resource, e.g., of a given floor of the facility, such as the floor at which the display interface of the electronic device is configured to display. A meeting room can be seen as a resource, such as a resource of the facility. The tertiary display configuration 63 comprises the user interface object 50 indicative of the location of the user in the facility.

The electronic device, such as the display interface, may for example provide, to the user, the tertiary display configuration 63 when the user has been in the vicinity of the electronic device for 5 seconds or more, such as up to 10 seconds. For example in Fig. 7C, the third time threshold upon which the third time criterion is based is 5 seconds. For example, in accordance with the distance parameter meeting the third time criterion, the electronic device is configured to provide the tertiary display configuration 63, e.g., comprising the tertiary user interface objects 71C,72C,73C,74C,75C, and the corresponding tertiary user interface objects 52, 53, and 54. The electronic device may for example be configured to fade in one or more of the secondary user interface objects 52, 53 and/or 54, e.g., upon the second time criterion being satisfied by the distance parameter, such as by the time parameter.

The layout of the tertiary interface objects 71C,72C,73C,74C,75C shown in the tertiary display configuration 63 is different to the layout of the primary and secondary interface objects of the corresponding primary and secondary display configuration, e.g., to enable first user interface objects 81,82,83 and 84 to be displayed in the tertiary display configuration 63.

User interface objects 81,82,83 and 84 for example each correspond to a given floor of the facility. For example, each of the user interface objects 81,82,83 and 84 may provide, e.g., to the user, an estimated resource of interest for the user.

For example, the user interface object 81 is associated with a first resource for floor 1 of the facility. For example, the user interface object 82 is associated with a first resource for floor 2 of the facility. For example, the user interface object 83 is associated with a first resource for floor 3 of the facility. For example, the user interface object 84 is associated with a first resource for floor 4 of the facility.

In other words, to obtain first resource information indicating that a first resource of the one or more resources is an estimated resource of interest for the comprises to obtain first information indicative that a first resource of the one or more resources in a given area (e.g., floor, partition) of the facility is an estimated resource of interest for the user for that given area of the facility.

For example, to provide a first user interface object associated with the first resource comprises to provide user interface objects (e.g., user interface objects 81-84) associated with a first resource, such as an estimated first resource of one or more areas (e.g., floors, partitions, etc) of the facility. For example, a facility may comprise one or more first resources when the facility comprises one or more floors, areas, partitions, etc.

For example, when the user in the vicinity of the electronic device is a different user, the estimated resource of interest for the user, such as the first resource, may be a different resource to the first primary resource, first secondary resource and first tertiary resource shown in Figs. 7A, 7B, and 7C respectively.

Examples of methods and products (electronic device and server device) according to the disclosure are set out in the following items:
Item 1. An electronic device comprising memory circuitry, processor circuitry, and a display interface, wherein the electronic device is configured to:
   - obtain, from one or more sensors, sensor data indicative of whether a user is in a vicinity of the electronic device;
   - obtain attendance data associated with one or more resources of a facility; and
   in accordance with the sensor data indicating that a user is in the vicinity of the electronic device:
   - obtain first resource information indicating that a first resource of the one or more resources is an estimated resource of interest for the user; and
   - provide, via the display interface and based on the attendance data and the first resource information, a first user interface object associated with the first resource.
Item 2. The electronic device according to item 1, wherein the attendance data comprises one or more of: event data associated with an event at the facility, facility data indicative of a layout of the facility, location data indicative of the location of an attendee, and historical attendance data indicative of an attendance history associated with the one or more resources of the facility.
Item 3. The electronic device according to any of the previous items, wherein to obtain first resource information comprises to obtain, based on the attendance data, an estimation of a first resource of the one or more resources being a resource of interest for the user.
Item 4. The electronic device according to item 3, wherein to obtain an estimation of a first resource comprises to:
   - obtain, based on the attendance data, one or more resource parameters each corresponding with a resource of the one or more resources; and
   - obtain a comparison of the resource parameters.
Item 5. The electronic device according to item 4, wherein the one or more resource parameters comprise a plurality of resource scores each corresponding with a resource of the one or more resources.
Item 6. The electronic device according to any of items 4-5, wherein to obtain a comparison of the resource parameters comprises to obtain a comparison of the plurality of resource scores, wherein the first resource is the resource of the one or more resources having the highest resource score.
Item 7. The electronic device according to item 6, wherein the first resource having the highest resource score is the resource of the one or more resources that is estimated to be of the highest interest to the user.
Item 8. The electronic device according to any of the previous items, wherein the sensor data is indicative of a number of users in the vicinity of the electronic device.
Item 9. The electronic device according to item 8, wherein to obtain an estimation of a first resource comprises to obtain, based on the number of users in the vicinity of the electronic device, one or more resource parameters each corresponding with a resource of the one or more resources.
Item 10. The electronic device according to any of items 7-9, wherein the electronic device is configured to:
   - determine whether a resource score of the plurality of resource scores meets a first criterion; and
   - in accordance with the determination that the resource score meets the first criterion, provide via the display interface and based on the attendance data and resource information, a user interface object associated with the resource corresponding with the resource score for which the first criterion has been met.
Item 11. The electronic device according to any of the previous items, wherein the electronic device comprises a first sensor, and wherein the first sensor is configured to obtain sensor data indicative of whether the user is in the vicinity of the electronic device.
Item 12. The electronic device according to any of the previous items, wherein to obtain sensor data indicative of whether the user is in the vicinity of the electronic device comprises to obtain, based on the sensor data, a distance parameter indicative of a distance of the user from the electronic device.
Item 13. The electronic device according to item 12, wherein to obtain sensor data indicative of whether the user is in a vicinity of the electronic device, comprises to obtain a determination of whether the distance parameter meets a second criterion.
Item 14. The electronic device according to any of items 12-13, wherein the electronic device is configured to:
   - determine whether the distance parameter meets a first time criterion; and
   - in accordance with the distance parameter meeting the first time criterion, provide a primary display configuration
Item 15. The electronic device according to any of items 12-14, wherein to provide the user interface object comprises to provide, based on the distance parameter, the first user interface object associated with the first resource.
Item 16. The electronic device according to any of the previous items, wherein the facility comprises the one or more resources and/or wherein the one or more resources are associated with the event at the facility.
Item 17. The electronic device according to any of the previous items, wherein the electronic device is configured obtain presence data from a resource sensor at the resource, indicative of attendees at the resource.
Item 18. The electronic device according to any of items 2-17, wherein to obtain the attendance data comprises to obtain filtered historical attendance data associated with the one or more resources of the facility.
Item 19. The electronic device according to any of the previous items, wherein the electronic device is configured to obtain, from a server device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the filtered historical attendance data, and the presence data.
Item 20. A server device comprising memory circuitry, processor circuitry, and an interface, wherein the server device is configured to:
   - obtain sensor data indicative of whether a user is in a vicinity of an electronic device;
   - determine, based on the sensor data, whether the user is in a vicinity of the electronic device;
   - obtain attendance data associated with one or more resources of a facility;
   - estimate, based on the attendance data and/or the sensor data, a first resource of the one or more resources being a resource of interest for the user; and
   - provide, to the electronic device, first resource information indicating that the first resource of the one or more resources is a resource of interest for the user.
Item 21. The server device according to item 20, wherein the attendance data comprises one or more of: event data associated with the event at the facility, facility data indicative of a layout of the facility, location data indicative of the location of an attendee, and historical attendance data indicative of an attendance history associated with the one or more resources of the facility.
Item 22. The server device according to any of items 20-21, wherein to estimate the first resource comprises to:
   - obtain, based on the attendance data, one or more resource parameters each corresponding with a resource of the one or more resources; and
   - determine a comparison of the resource parameters.
Item 23. The server device according to item 22, wherein the one or more resource parameters comprise a plurality of resource scores each corresponding with a resource of the one or more resources.
Item 24. The server device according to any of items 22-23, wherein to determine a comparison of the resource parameters comprises to obtain a comparison of the plurality of resource scores, wherein the first resource is the resource of the one or more resources having the highest resource score.
Item 25. The server device according to item 24, wherein the first resource having the highest resource score is the resource of the one or more resources that is estimated to be of the highest interest to the user.
Item 26. The server device according to any of items 20-25, wherein the sensor data is indicative of a number of users in the vicinity of the electronic device.
Item 27. The server device according to item 26, wherein to estimate the first resource comprises to obtain, based on the number of users in the vicinity of the electronic device, one or more resource parameters each corresponding with a resource of the one or more resources.
Item 28. The server device according to any of items 25-27, wherein the server device is configured to:
   - determine whether a resource score of the plurality of resource scores meets a first criterion; and
   - provide, to the electronic device, an information indicative of the first criterion being met by the resource score of the plurality of resource scores.
Item 29. The server device according to any of items 20-28, wherein to determine whether the user is in a vicinity of the electronic device comprises to determine, based on the sensor data, a distance parameter indicative of a distance of the user from the electronic device.
Item 30. The server device according to item 29, wherein to determine whether the user is in a vicinity of the electronic device comprises to determine whether the distance parameter meets a second criterion.
Item 31. The server device according to any of items 29-30, wherein the server device is configured to:
   - determine whether the distance parameter meets a first time criterion; and
   - **In** accordance with the distance parameter meeting the first time criterion provide, to the electronic device, an indication that the distance parameter meets the first time criterion.
Item 32. The server device according to any of items 20-31, wherein the facility comprises the one or more resources and/or wherein the one or more resources are associated with an event at the facility.
Item 33. The server device according to any of items 20-32, wherein the server device is configured to obtain presence data from a resource sensor at the resource, indicative of attendees at the resource.
Item 34. The server device according to any of items 21-33, wherein to obtain the attendance data comprises to obtain filtered historical attendance data associated with the one or more resources of the facility.
Item 35. The server device according to any of items 20-34, wherein the server device is configured to provide, to an electronic device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the filtered historical attendance data, and the presence data.
Item 36. A system comprising a plurality of electronic devices and a server device configured according to any of items 1-35.
Item 37. A method (100), performed by an electronic device, wherein the method (100) comprises:
   - Obtaining (S102), from one or more sensors, sensor data indicative of whether a user is in a vicinity of the electronic device;
   - Obtaining (S106) attendance data associated with one or more resources of a facility; and
   in accordance with the sensor data indicating that a user is in the vicinity of the electronic device:
   - Obtaining (S108) first resource information indicating that a first resource of the one or more resources is an estimated resource of interest for the user; and
   - Providing (S118) via the display interface and based on the attendance data and the first resource information, a first user interface object associated with the first resource.
Item 38. The method according to item 37, wherein the attendance data comprises one or more of: event data associated with an event at the facility, facility data indicative of a layout of the facility, location data indicative of the location of an attendee, and historical attendance data indicative of an attendance history associated with the one or more resources of the facility.
Item 39. The method according to any of items 37-38, wherein obtaining (S108) first resource information comprises obtaining (S108A), based on the attendance data, an estimation of a first resource of the one or more resources being a resource of interest for the user.
Item 40. The method according to item 39, wherein obtaining (S108A) an estimation of a first resource comprises:
   - obtaining (S108AA), based on the attendance data, one or more resource parameters each corresponding with a resource of the one or more resources; and
   - obtaining (S108AB) a comparison of the resource parameters.
Item 41. The method according to item 40, wherein the one or more resource parameters comprise a plurality of resource scores each corresponding with a resource of the one or more resources.
Item 42. The method according to any of items 40-41, wherein obtaining (S108AB) a comparison of the resource parameters comprises obtaining (S108AB_1) a comparison of the plurality of resource scores, wherein the first resource is the resource of the one or more resources having the highest resource score.
Item 43. The method according to item 42, wherein the first resource having the highest resource score is the resource of the one or more resources that is estimated to be of the highest interest to the user.
Item 44. The method according to any of items 37-43, wherein the sensor data is indicative of a number of users in the vicinity of the electronic device.
Item 45. The method according to item 44, wherein obtaining (S108A) an estimation of a first resource comprises obtaining (S108AC), based on the number of users in the vicinity of the electronic device, one or more resource parameters each corresponding with a resource of the one or more resources.
Item 46. The method according to any of items 43-45, wherein the method (100) comprises:
   - determining (S110) whether a resource score of the plurality of resource scores meets a first criterion; and
   - in accordance with determining (S110) that the resource score meets the first criterion, providing (S112) via the display interface and based on the attendance data and resource information, a user interface object associated with the resource corresponding with the resource score for which the first criterion has been met.
Item 47. The method according to any of items 37-46, wherein obtaining (S102) sensor data indicative of whether the user is in the vicinity of the electronic device comprises obtaining (S102A), based on the sensor data, a distance parameter indicative of a distance of the user from the electronic device.
Item 48. The method according to item 47, wherein obtaining (S102) sensor data indicative of whether the user is in a vicinity of the electronic device, comprises (S102B) obtaining a determination of whether the distance parameter meets a second criterion.
Item 49. The method according to any of items 47-48, wherein the method (100) comprises:
   - determining (S114) whether the distance parameter meets a first time criterion; and
   - in accordance with the distance parameter meeting the first time criterion, providing (S116) a primary display configuration
Item 50. The method according to items 47-49, wherein providing (S112) the user interface object comprises providing (S112A), based on the distance parameter, the first user interface object associated with the first resource.
Item 51. The method according to any of items 37-51, wherein the facility comprises the one or more resources and/or wherein the one or more resources are associated with the event at the facility.
Item 52. The method according to any of items 37-51, wherein the method (100) comprises obtaining (S104) presence data from a resource sensor at the resource, indicative of attendees at the resource.
Item 53. The method according to any of items 38-52, wherein obtaining (S102) the attendance data comprises obtaining (S102C) filtered historical attendance data associated with the one or more resources of the facility.
Item 54. The method according to any of items 37-53, wherein the method (100) comprises obtaining, from a server device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the filtered historical attendance data, and the presence data.
Item 55. A method (200), performed by a server device, wherein the method (200) comprises:
   - Obtaining (S202) sensor data indicative of whether a user is in a vicinity of an electronic device;
   - Determining (S206), based on the sensor data, whether the user is in a vicinity of the electronic device;
   - obtaining (S208) attendance data associated with one or more resources of a facility;
   - estimating (S210), based on the attendance data and/or the sensor data, a first resource of the one or more resources being a resource of interest for the user; and
   - providing (S220), to the electronic device, first resource information indicating that the first resource of the one or more resources is a resource of interest for the user.
Item 56. The method according to item 55, wherein the attendance data comprises one or more of: event data associated with the event at the facility, facility data indicative of a layout of the facility, location data indicative of the location of an attendee, and historical attendance data indicative of an attendance history associated with the one or more resources of the facility.
Item 57. The method according to any of items 55-56, wherein estimating (S210) the first resource comprises:
   - Obtaining (S210A), based on the attendance data, one or more resource parameters each corresponding with a resource of the one or more resources; and
   - determining (S210B) a comparison of the resource parameters.
Item 58. The method according to item 57, wherein the one or more resource parameters comprise a plurality of resource scores each corresponding with a resource of the one or more resources.
Item 59. The method according to any of items 57-58, wherein determining (S210B) a comparison of the resource parameters comprises obtaining (S210BA) a comparison of the plurality of resource scores, wherein the first resource is the resource of the one or more resources having the highest resource score.
Item 60. The method according to item 58, wherein the first resource having the highest resource score is the resource of the one or more resources that is estimated to be of the highest interest to the user.
Item 61. The method according to any of items 55-60, wherein the sensor data is indicative of a number of users in the vicinity of the electronic device.
Item 62. The device according to item 61, wherein estimating (S210B) the first resource comprises obtaining (S210C), based on the number of users in the vicinity of the electronic device, one or more resource parameters each corresponding with a resource of the one or more resources.
Item 63. The method according to any of items 60-62, wherein the method comprises:
   - Determining (S212) whether a resource score of the plurality of resource scores meets a first criterion; and
   - in accordance with the resource score of the plurality of resource scores meeting the first criterion, providing (S214), to the electronic device, an information indicative of the first criterion being met by the resource score of the plurality of resource scores.
Item 64. The method according to any of items 55-63, wherein determining (S206) whether the user is in a vicinity of the electronic device comprises determining (S206A), based on the sensor data, a distance parameter indicative of a distance of the user from the electronic device.
Item 65. The method according to item 64, wherein determining (S206) whether the user is in a vicinity of the electronic device comprises determining (S206B) whether the distance parameter meets a second criterion.
Item 66. The method according to any of items 64-65, wherein the method comprises:
   - determining (S216) whether the distance parameter meets a first time criterion; and
   **In** accordance with the distance parameter meeting the first time criterion providing (S218), to the electronic device, an indication that the distance parameter meets the first time criterion.
Item 67. The method according to any of items 55-66, wherein the facility comprises the one or more resources and/or wherein the one or more resources are associated with an event at the facility.
Item 68. The method according to any of items 55-67, wherein the method (200) comprises obtaining (S204) presence data from a resource sensor at the resource, indicative of attendees at the resource.
Item 69. The method according to any of items 56-68, wherein obtaining (S208) the attendance data comprises obtaining (S208A) filtered historical attendance data associated with the one or more resources of the facility.
Item 70. The method according to any of items 55-69, wherein the method (200) comprises providing, to an electronic device, one or more of: the attendance data, the first resource information, the one or more resource parameters, the comparison of the resource parameters, the first criterion, the determination of whether the resource score meets the first criterion, the distance parameter, the second criterion, the determination of whether the distance parameter meets the second criterion, the filtered historical attendance data, and the presence data.

The use of the terms "first", "second", "third" and "fourth", "primary", "secondary", "tertiary" etc. does not imply any particular order, but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering. Furthermore, the labelling of a first element does not imply the presence of a second element and vice versa.

**It** may be appreciated that the Figures comprise some circuitries or operations which are illustrated with a solid line and some circuitries, components, features, or operations which are illustrated with a dashed line. Circuitries or operations which are comprised in a solid line are circuitries, components, features or operations which are comprised in the broadest example. Circuitries, components, features, or operations which are comprised in a dashed line are examples which may be comprised in, or a part of, or are further circuitries, components, features, or operations which may be taken in addition to circuitries, components, features, or operations of the solid line examples. **It** should be appreciated that these operations need not be performed in order presented. Furthermore, it should be appreciated that not all of the operations need to be performed. The example operations may be performed in any order and in any combination. **It** should be appreciated that these operations need not be performed in order presented. Circuitries, components, features, or operations which are comprised in a dashed line may be considered optional.

Other operations that are not described herein can be incorporated in the example operations. For example, one or more additional operations can be performed before, after, simultaneously, or between any of the described operations.

Certain features discussed above as separate implementations can also be implemented in combination as a single implementation. Conversely, features described as a single implementation can also be implemented in multiple implementations separately or in any suitable sub-combination. Moreover, although features may be described above as acting in certain combinations, one or more features from a claimed combination can, in some cases, be excised from the combination, and the combination may be claimed as any sub-combination or variation of any sub-combination

**It** is to be noted that the word "comprising" does not necessarily exclude the presence of other elements or steps than those listed.

**It** is to be noted that the words "a" or "an" preceding an element do not exclude the presence of a plurality of such elements.

**It** is to be noted that the term "indicative of" may be seen as "associated with", "related to", "descriptive of", "characterizing", and/or "defining". The terms "indicative of", "associated with", "related to", "descriptive of", "characterizing", and "defining" can be used interchangeably. The term "indicative of" can be seen as indicating a relation. For example, weight data indicative of weight may comprise one or more weight parameters.

**It** is to be noted that the word "based on" may be seen as "as a function of" and/or "derived from". The terms "based on" and "as a function of" can be used interchangeably. For example, a parameter determined "based on" a data set can be seen as a parameter determined "as a function of" the data set. **In** other words, the parameter may be an output of one or more functions with the data set as an input.

A function may be characterizing a relation between an input and an output, such as mathematical relation, a database relation, a hardware relation, logical relation, and/or other suitable relations.

**It** should further be noted that any reference signs do not limit the scope of the claims, that the examples may be implemented at least in part by means of both hardware and software, and that several "means", "units" or "devices" may be represented by the same item of hardware. Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately", "about", "generally," and "substantially" may refer to an amount that is within less than or equal to 10% of, within less than or equal to 5% of, within less than or equal to 1% of, within less than or equal to 0.1% of, and within less than or equal to 0.01% of the stated amount. If the stated amount is 0 (e.g., none, having no), the above recited ranges can be specific ranges, and not within a particular % of the value. For example, within less than or equal to 10 wt./vol. % of, within less than or equal to 5 wt./vol. % of, within less than or equal to 1 wt./vol. % of, within less than or equal to 0.1 wt./vol. % of, and within less than or equal to 0.01 wt./vol. % of the stated amount.

The various example methods, devices, nodes and systems described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program circuitries may include routines, programs, objects, components, data structures, etc. that perform specified tasks or implement specific abstract data types. Computer-executable instructions, associated data structures, and program circuitries represent examples of program code for executing steps of the methods disclosed herein. The particular sequence of such executable instructions or associated data structures represents examples of corresponding acts for implementing the functions described in such steps or processes.

Although features have been shown and described, it will be understood that they are not intended to limit the claimed disclosure, and it will be made obvious to those skilled in the art that various changes and modifications may be made without departing from the scope of the claimed disclosure. The specification and drawings are, accordingly, to be regarded in an illustrative rather than restrictive sense. The claimed disclosure is intended to cover all alternatives, modifications, and equivalents.

## Claims

1. An electronic device comprising memory circuitry, processor circuitry, and a display interface, wherein the electronic device is configured to:
- obtain, from one or more sensors, sensor data indicative of whether a user is in a vicinity of the electronic device;
- obtain attendance data associated with one or more resources of a facility; and
in accordance with the sensor data indicating that a user is in the vicinity of the electronic device:
- obtain first resource information indicating that a first resource of the one or more resources is an estimated resource of interest for the user; and
- provide, via the display interface and based on the attendance data and the first resource information, a first user interface object associated with the first resource.

2. The electronic device according to claim 1, wherein the attendance data comprises one or more of: event data associated with an event at the facility, facility data indicative of a layout of the facility, location data indicative of the location of an attendee, and historical attendance data indicative of an attendance history associated with the one or more resources of the facility.

3. The electronic device according to any of the previous claims, wherein to obtain first resource information comprises to obtain, based on the attendance data, an estimation of a first resource of the one or more resources being a resource of interest for the user.

4. The electronic device according to claim 3, wherein to obtain an estimation of a first resource comprises to:
- obtain, based on the attendance data, one or more resource parameters each corresponding with a resource of the one or more resources; and
- obtain a comparison of the resource parameters.

5. The electronic device according to claim 4, wherein the one or more resource parameters comprise a plurality of resource scores each corresponding with a resource of the one or more resources.

6. The electronic device according to any of claims 4-5, wherein to obtain a comparison of the resource parameters comprises to obtain a comparison of the plurality of resource scores, wherein the first resource is the resource of the one or more resources having the highest resource score.

7. The electronic device according to claim 6, wherein the first resource having the highest resource score is the resource of the one or more resources that is estimated to be of the highest interest to the user.

8. The electronic device according to any of the previous claims, wherein the sensor data is indicative of a number of users in the vicinity of the electronic device.

9. The electronic device according to claim 8, wherein to obtain an estimation of a first resource comprises to obtain, based on the number of users in the vicinity of the electronic device, one or more resource parameters each corresponding with a resource of the one or more resources.

10. The electronic device according to any of claims 7-9, wherein the electronic device is configured to:
- determine whether a resource score of the plurality of resource scores meets a first criterion; and
- in accordance with the determination that the resource score meets the first criterion, provide via the display interface and based on the attendance data and resource information, a user interface object associated with the resource corresponding with the resource score for which the first criterion has been met.

11. The electronic device according to any of the previous claims, wherein the electronic device comprises a first sensor, and wherein the first sensor is configured to obtain sensor data indicative of whether the user is in the vicinity of the electronic device.

12. The electronic device according to any of the previous claims, wherein to obtain sensor data indicative of whether the user is in the vicinity of the electronic device comprises to obtain, based on the sensor data, a distance parameter indicative of a distance of the user from the electronic device.

13. The electronic device according to claim 12, wherein to obtain sensor data indicative of whether the user is in a vicinity of the electronic device, comprises to obtain a determination of whether the distance parameter meets a second criterion.

14. The electronic device according to any of claims 12-13, wherein the electronic device is configured to:
- determine whether the distance parameter meets a first time criterion; and
- in accordance with the distance parameter meeting the first time criterion, provide a primary display configuration.

15. The electronic device according to any of claims 12-14, wherein to provide the user interface object comprises to provide, based on the distance parameter, the first user interface object associated with the first resource.
